(19) Europäisches Patentamt
European Patent Office
Office européen des brevets

(11) **EP 2 166 807 B1**

(12) **EUROPEAN PATENT SPECIFICATION**

(45) Date of publication and mention
of the grant of the patent:
**01.12.2010 Bulletin 2010/48**

(51) Int Cl.:
***H04W 72/08*** *(2009.01)*

(21) Application number: **08305573.1**

(22) Date of filing: **19.09.2008**

(54) **Method for building sets of mobile stations in SDMA systems, corresponding mobile station, base stations and radio communication network**

Verfahren zur Satzbildung von mobilen Stationen in SDMA-Systemen, entsprechende Mobilstation, Basisstationen und Funkkommunikationsnetzwerk

Procédé pour la construction d'ensembles de stations mobiles dans des systèmes SDMA, station mobile correspondante, stations de base et réseau de communication radio

(84) Designated Contracting States:
**DE FR GB**

(43) Date of publication of application:
**24.03.2010 Bulletin 2010/12**

(73) Proprietor: **Alcatel Lucent
75008 Paris (FR)**

(72) Inventors:
• **Wild, Thorsten
70435, Stuttgart (DE)**

• **Hoek, Cornelis
71732, Tamm (DE)**

(74) Representative: **Brose, Gerhard
Alcatel Lucent
Intellectual Property & Standards
Lorenzstrasse 10
70435 Stuttgart (DE)**

(56) References cited:
**EP-A- 1 784 032         WO-A-98/30047
US-A1- 2007 249 402**

Description

## FIELD OF THE INVENTION

The invention relates to a method for building sets of mobile stations in a radio communication system according to the preamble of claim 1, to a radio communication system according to the preamble of claim 11, to a base station according to the preamble of claim 12, and to a mobile station according to the preamble of claim 14.

## BACKGROUND OF THE INVENTION

The method of scheduling mobile stations in a radio communication system is usually performed in such a way, that the performance in terms of data throughput for the radio communication system is optimized.

In an SDMA radio communication system (SDMA = space division multiple access) multiple mobile stations can be scheduled by a base station using a MIMO technique (MIMO = multiple input multiple output) at a same frequency/ time resource or same frequency/time/code resource by spatial separation of the mobile stations.

The same frequency/time resource means that two or more mobile stations receive downlink data at same frequency and same time. In this case space is used as an additional multiple access dimension instead of time and frequency to have an orthogonal component in the downlink data for crosstalk avoidance and minimised interference effects.

The same frequency/time/code resource means that two or more mobile stations receive downlink data at same frequency, same time, and same spreading code in case of a CDMA component in the downlink channel. In this case space is used as an additional multiple access dimension instead of time, frequency and code to have an orthogonal component in the downlink data for crosstalk avoidance and minimised interference effects.

In EP 1 784 032 A1 a method for determining a set of mobile stations for on identical basic resource unit in a base station is disclosed. The determination is based on uplink feedback channel information related to a transmit covariance matrix and information (e.g. estimated SINR of the mobile station receiver (SINR = signal-to-interference-plus-noise ratio)) related to a channel quality.

In US 2007/0249402 A1 a wireless communication system implements beamforming across multiple omni-directional antennas to create beams at different spatial directions. The wireless communication system allocates resources to a communication link using a combination of beam sets and substantially orthogonal resources in order to provide improved coverage without a corresponding increase in interference.

Feedback reporting information is used in different ways depending on radio communication system type:

In GSM or UMTS radio communication systems (GSM = Global System for Mobile Communication; UMTS = Universal Mobile Telecommunication System) for example, feedback reporting is used for adapting a downlink channel from a base station to a mobile station according to several properties of a downlink path related to the downlink channel. Such properties are for instance: distance between the base station and the mobile station, area constitution (e.g. urban, rural) between the base station and the mobile station, spectral use of the downlink path by other transmitters, speed and direction of movement of the mobile station etc. Within the scope of the feedback reporting the mobile station measures beacons or pilots of the downlink channel and reports measurement information (e.g. channel quality indicator, received signal strength indicator) via an uplink channel to the base station. The base station uses the measurement information to adapt parameters (e.g. transmission power, transmission channel) and to improve characteristics (e.g. power consumption, transmission error rate) of the downlink channel.

In SISO and SIMO radio communication systems (SISO = single input single output; SIMO = single input multiple output) using one transmitting antenna one data signal per time unit is transmitted from the transmitting antenna resulting in a single downlink beam of the downlink channel. In such a case it is sufficient to report the channel quality indicator or the received signal strength indicator and there is no need to identify the downlink beam and to report a beam indicator for the downlink beam within the measurement information.

In MISO or MIMO radio communication systems (MISO = multiple input single output) at least two transmitting antennas and one (MISO) or more (MIMO) receiving antennas are used. Separately encoded data signals can be transmitted per transmitting antenna via two or more downlink beams of the downlink channel on the same time/frequency/ code - multiple access resource. In such a case, in addition to spectral noise, interference between the downlink beams occurs.

For single user MIMO in LTE Release 8 (3GPP TS 36.213 V8.2.0) single stream codebook based precoding/ beamforming will be used and single user MIMO feedback information comprises three parameters: CQI (CQI = channel quality indication), PMI (PMI = precoding matrix indicator), and RI (RI = rank indication). CQI is a parameter indicating a channel quality of a downlink beam with a largest average received modulated carrier power. For LTE Release 8, the CQI parameter is on index for a transport format of the downlink channel. PMI is a parameter indicating a beam index, which corresponds to a precoding vector of the downlink beam for which the channel quality is reported. The beam index belongs to an entry of a codebook, which contains precoding vectors with all allowed Tx antenna weight combinations. RI is a parameter estimated by the mobile station indicating a number of streams for which best data throughput can be expected.

The MIMO techniques described in EP 1 784 032 A1 and US 2007/0249402 A1 use multiple downlink beams, which are directed to multiple mobile stations. It is beneficial for performance and overall data throughput in a radio cell or in a sector of the radio cell, if a downlink beam directed to a specific mobile station generates as few interference as possible to downlink beams directed to other mobile stations. Therefore a base station may build a set of adequate mobile stations for a same frequency time resource. This means that the mobile stations of such a set are scheduled at a same time with a same frequency but with spatial separation of downlink beams, so that the downlink beams generate fewest interference between each other.

Starting from the disclosures of US 2007/0249402 A1, for building such a set of adequate mobile stations an appropriate feedback information has to be reported from the mobile stations to the base station, which should not consume too much resources of the uplink channel.

## SUMMARY OF THE INVENTION

This object is achieved by a method for building sets of mobile stations in a radio communication system which comprises the steps of: transmitting first reference signals from a base station to at least two mobile stations for being able to determine properties of a first downlink channel between the base station and the at least two mobile stations; receiving the first reference signals by the at least two mobile stations; determining a first feedback information at a first one of the at least two mobile stations and a second feedback information at a second one of the at least two mobile stations comprising each a first component indicating a downlink beam with a largest received carrier power of at least two downlink beams of the first downlink channel; transmitting the first feedback information and the second feedback information from the at least two mobile stations to the base station; receiving the first feedback information and the second feedback information at the base station; and building a mobile station set of at least two of the at least two mobile stations at the base station according to the first feedback information and the second feedback information, if at least two mobile stations (MS1, MS2, MS3) have reported feedback information, wherein the first feedback information and the second feedback information further comprise a second component indicating a further downlink beam with a fewest received carrier power of the at least two downlink beams.

Using the feedback information with indications for the best downlink beam and the best companion downlink allows the base station to build the mobile station set without an absolute necessity to report feedback information with a ranking, with quality indications, with signal-to-interference ratio information, or with signal-to-interference-plus-ratio information for all downlink beams by each mobile station.

Further characteristics are achieved by preferred embodiments of the invention indicated by dependent claims for the method, by an independent claim 1 for the radio communication system, by an independent claim 12 for the base station, and by an independent claim 14 for a mobile station.

These further characteristics and their advantages of the preferred embodiments of the invention will become apparent in the following detailed description and will be illustrated by accompanying drawings given by way of non-limiting illustrations.

## BRIEF DESCRIPTION OF THE DRAWINGS

Figure 1 shows a block diagram of a radio communication network performing a method in accordance to a first embodiment of the invention.

Figure 2 shows a block diagram of a base station performing the method in accordance to the first embodiment of the invention.

Figure 3 shows a block diagram of a mobile station performing the method in accordance to the first embodiment of the invention.

Figure 4 shows a block diagram of a cell sector being served by the base station in accordance to the first embodiment of the invention.

Figure 5 shows a flow diagram of the method in accordance to the first embodiment of the invention.

Figure 6 shows a flow diagram of a method in accordance to a second embodiment of the invention.

Figure 7 shows a flow diagram of a method in accordance to a third embodiment of the invention.

Figure 8 shows a flow diagram of a method in accordance to a fourth embodiment of the invention.

Figure 9 shows a flow diagram of a method in accordance to a fifth embodiment of the invention.

Figure 10 shows a flow diagram of a method in accordance to a sixth embodiment of the invention.

Figure 11 shows a flow diagram of a method in accordance to a seventh embodiment of the invention.

Figure 12 shows a block diagram of a radio communication system performing a method in accordance to an eighth embodiment of the invention.

Figure 13 shows a flow diagram of the method in accordance to the eighth embodiment of the invention.

Figure 14 shows a block diagram of a radio communication system performing a method in accordance to a ninth embodiment of the invention.

Figure 15 shows a flow diagram of the method in accordance to the ninth embodiment of the invention.

Figure 16 shows a block diagram of a radio communication network performing a method in accordance to a tenth embodiment of the invention.

Figure 17 shows a block diagram of an operation and maintenance centre performing the method in accordance to the tenth embodiment of the invention.

## DETAILED DESCRIPTION OF THE INVENTION

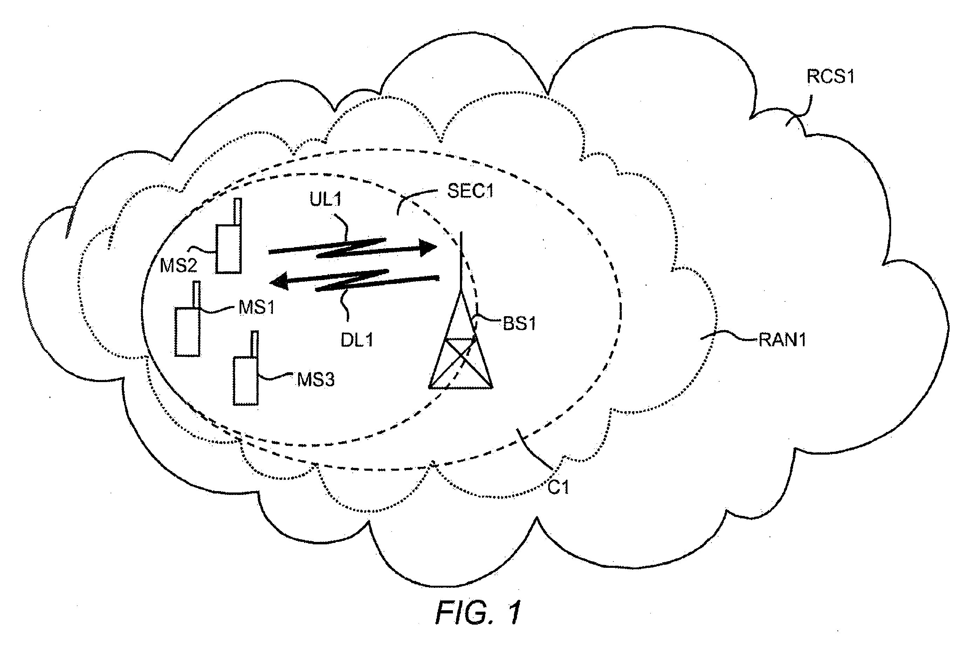

Referring to Figure 1 a first radio communication system RCS1 contains a first radio access network RAN1 according to a first embodiment of the invention. The first radio access network RAN1 contains a first radio cell C1. Further radio cells of the first radio access network RAN1 are not shown for simplification.

The first radio cell C1 contains a first base station BS1. A first sector SEC1 of the first radio cell C1 contains a first mobile station MS1, a second mobile station MS2, and a third mobile station MS3. Further mobile stations of the first sector SEC1 are not shown for simplification.

The first mobile station MS1, the second mobile station MS2, and the third mobile station MS3 are connected to the first base station BS1 via a first downlink channel DL1.

In addition the first mobile station MS1, the second mobile station MS2, and the third mobile station MS3 are connected to the first base station BS1 via a first uplink channel UL1.

Instead of the first downlink channel DL1 and the first uplink channel UL1 also a combined channel with downlink and uplink time slots can be used. In another option the first mobile station MS1, the second mobile station MS2, and the third mobile station MS3 can be connected to the first base station BS1 via different uplink channels.

First reference signals are transmitted from the first base station BS1 via the first downlink channel DL1 to the first mobile station MS1, the second mobile station MS2, and the third mobile station MS3. First feedback information is transmitted via the first uplink channel UL1 from the first mobile station MS1 to the first base station BS1. Equally, the second mobile station MS2 transmits second feedback information and the third mobile station MS3 transmits third feedback information via the first uplink channel UL1 to the first base station BS1.

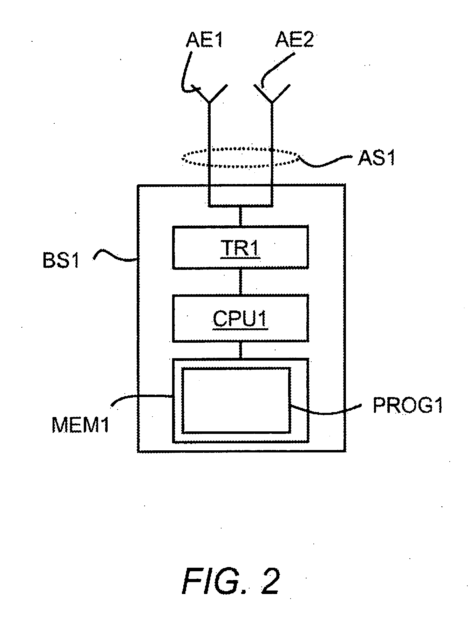

Referring to Figure 2 the first base station BS1 of Figure 1 contains a first antenna system AS1, a first transceiver TR1, a first CPU (CPU = central processing unit) CPU1, and a first computer readable medium MEM1.

The first antenna system AS1 contains a first antenna element AE1 and a second antenna element AE2. The first antenna system AS1 can also contain more than two antenna elements. But this is not shown for simplification.

The first antenna element AE1 and the second antenna element AE2 of the first base station BS1 are used for the first downlink channel DL1 and the first uplink channel UL1. Optionally the first antenna element AE1 and the second antenna element AE2 can be used for the first downlink channel DL1 and an additional receiver antenna can be used for the first uplink channel UL1. Other mappings between the first antenna element AE1 or the second antenna element AE2 to the first uplink channel UL1 are possible.

The first transceiver TR1 transmits the first reference signals and receives the first feedback information, the second feedback information, and the third feedback information via the first antenna system AS1.

The first computer readable medium MEM1 is foreseen for storing a first computer readable program PROG1.

The first computer readable program PROG1 is foreseen for executing steps of the method according to the first embodiment of the invention. The first CPU CPU1 is foreseen for executing the first computer readable program PROG1.

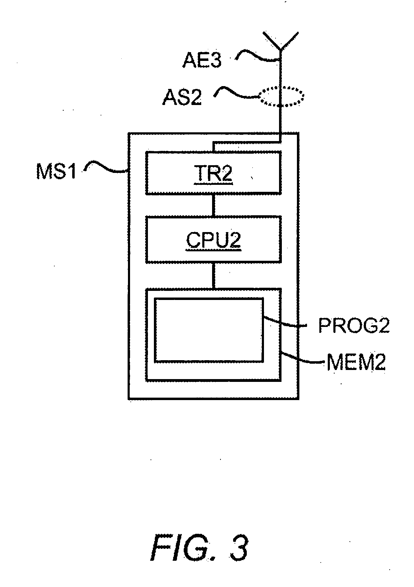

Referring to Figure 3 the first mobile station MS1 of Figure 1 contains a second antenna system AS2, a second transceiver TR2, a second CPU CPU2, and a second computer readable medium MEM2.

The second antenna system AS2 contains a third antenna element AE3. The second antenna system AS2 can also contain more than one antenna element for reception and/or transmission. But this is not shown for simplification.

The third antenna element AE3 is used for the first downlink channel DL1 and the first uplink channel UL1. Alternatively a further antenna element is used to split downlink and uplink transmission on separate antenna elements.

The second transceiver TR2 receives the first reference signals and transmits the first feedback information via the second antenna system AS2.

The second computer readable medium MEM2 is foreseen for storing a second computer readable program PROG2. The second computer readable program PROG2 is foreseen for executing steps of the method according to the first embodiment of the invention.

The second CPU CPU2 is foreseen for executing the second computer readable program PROG2.

For the following description, the second mobile station MS2 and the third mobile station MS3 contain similar components as the first mobile station MS1 with similar functions. If there is a first group of mobile stations within the first radio communication system RCS1 not having functions according to the invention and a second group of mobile stations having functions according to the invention, than the mobile stations of the first group cannot be used for an improved building of mobile station sets according to the invention and only the mobile stations of the second group are used for the improved building of mobile station sets. For the mobile stations of the first group well-known mechanisms will be used to build mobile station sets or to schedule them without using a mobile station set.

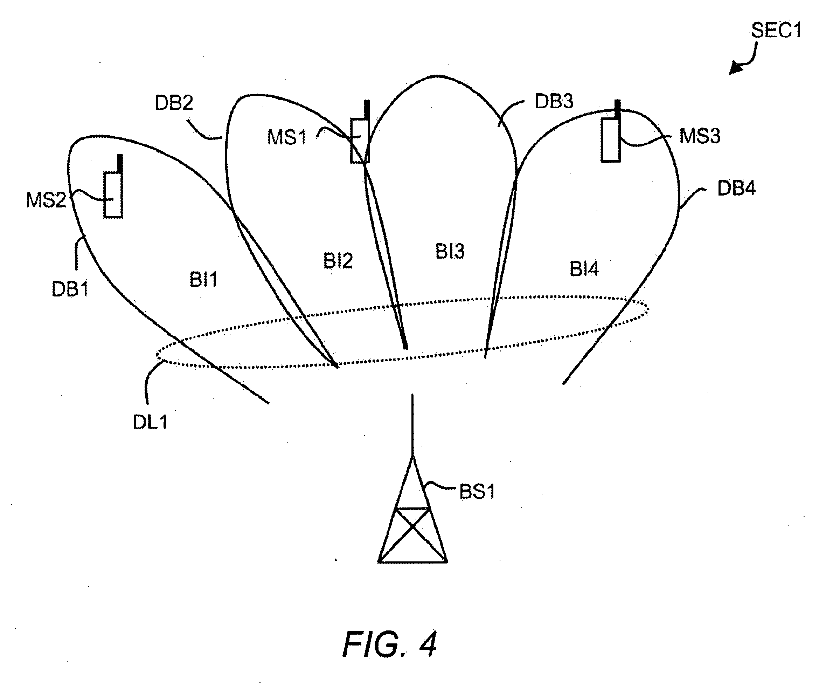

Referring to Figure 4 showing the first sector SEC1 according to the first embodiment of the invention, the first downlink channel DL1 comprises exemplarily four downlink beams DB1, DB2, DB3, and DB4. The first downlink channel DL1 can also comprise further downlink beams. But this is not shown for simplification. The first downlink beam DB1, the second downlink beam DB2, the third downlink beam DB3 and the fourth downlink beam DB4 represent all allowed antenna weight combinations to be used at the first antenna system AS1. Each downlink beam DB1, DB2, DB3, and DB4 is directed towards a slightly different direction in space. In the example, the first mobile station MS1 is located within second and third coverage areas of the second downlink beam DB2 and the third downlink beam DB3, the second mobile station MS2 is located within a first coverage area of the first downlink beam DB1, and the third mobile station MS3 is located within a fourth coverage area of the fourth downlink beam DB4.

The first downlink beam DB1 is assigned a first beam index BI1, the second downlink beam DB2 is assigned a second beam index BI2, the third downlink beam DB3 is assigned a third beam index BI3 and the fourth downlink beam DB4 is assigned a fourth beam index BI4.

In a so-called codebook shown in table 1 each beam index BI1, BI2, BI3, and BI4 corresponds to an allowed antenna weight combination, equivalent to an allowed so-called precoding vector, with first Tx antenna weights (Tx = transmission) $w1\_i (i =1,2,3,4)$ as first weight parameters for the first antenna element AE1 and with second Tx antenna weights $w2\_i (i =1,2,3,4)$ as second weight parameters for the second antenna element AE2.

Exemplarily, a first antenna weight parameter combination $w1\_1$, $w2\_1$ is used as a first precoding vector $wBI1 =(w1\_1, w2\_1)$ which corresponds to the first downlink beam DB1. Similar mappings exist for the other downlink beams DB2, DB3, and DB4.

The codebook is to be known by the first base station BS1 and by all mobile stations MS1, MS2, and MS3 currently located in the first sector SEC1.

Table 1

| Beam index | Tx antenna weights | |
| --- | --- | --- |
| | first weight parameters $w1\_i$ for the first antenna element AE 1 | second weight parameters $w2\_i$ for the second antenna element AE2 |
| BI1 | $w1\_1$ | $w2\_1$ |
| BI2 | $w1\_2$ | $w2\_2$ |

(continued)

| Beam index | Tx antenna weights | |
|---|---|---|
| | first weight parameters $w1\_i$ for the first antenna element AE 1 | second weight parameters $w2\_i$ for the second antenna element AE2 |
| BI3 | $w1\_3$ | $w2\_3$ |
| BI4 | $w1\_4$ | $w2\_4$ |

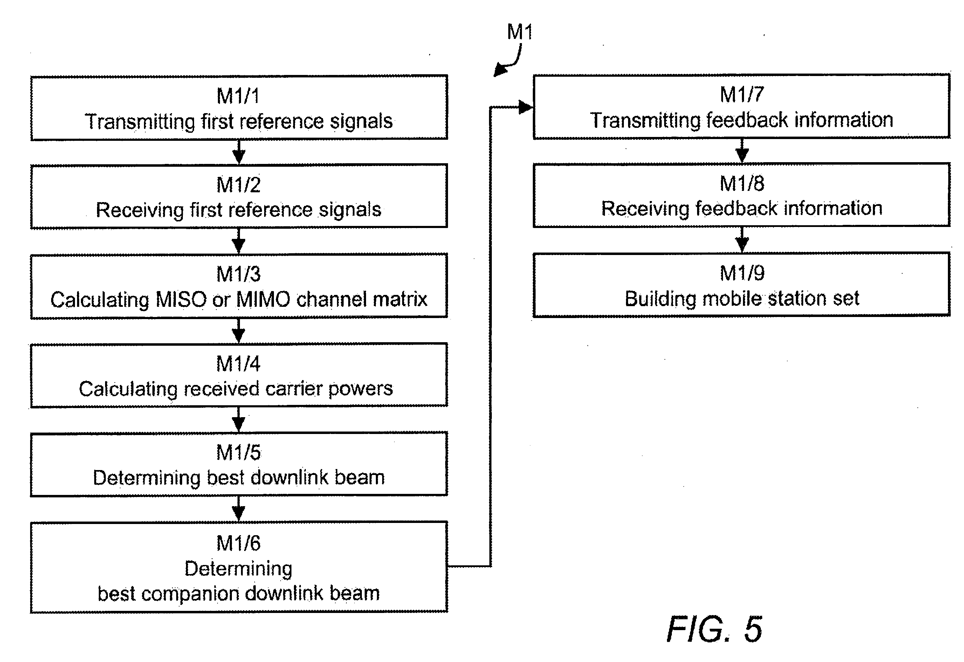

Figure 5 shows a method M1 for use in the first radio communication system RCS1 according to the first embodiment of the invention.

In step M1/1 the first base station BS1 transmits periodically the first reference signals via the first antenna element AE1 and the second antenna element AE2, whereas the first reference signals are transmitted unweighted, e.g. with a same amplitude, unvarying for both antenna elements AE1, AE2, e.g. with a constant amplitude, and orthogonal for both antenna elements AE1, AE2. The orthogonality of the first reference signals can be achieved for example by using different codes or different frequencies or different transmission times on both antenna elements AE1, AE2. Candidates for such first reference signals are common pilots as being used for example in an OFDM technique (OFDM = Orthogonal Frequency Division Multiplexing) for WiMAX systems (WiMAX = Worldwide Interoperability for Microwave Access). The mobile stations MS1, MS2, and MS3 know parameters of a transmission vector $\underline{s}$ = ($s1,s2$) of the first reference signals.

The first mobile station MS1 receives the first reference signals and determines a reception scalar $g1$ of the received first reference signals in a further step M1/2. in case of an OFDM radio communication system the reception scalar $g1$ is to be determined for a certain sub-carrier. Reception powers $P\_g1\_s1$ and $P\_g1\_s2$ for the first reference signals to be transmitted by the first base station BS1 via the first antenna element AE1 and the second antenna element AE2 and measured by the first mobile station MS1 via the third antenna element AE3 are equal to expectation values of $|g1|^2(s1)$ and $|g1|^2(s2)$.

In a next step M1/3, the first mobile station MS1 calculates a MISO channel vector $\underline{H}$ for the first downlink channel DL1. The MISO channel vector $\underline{H}$ is time-dependent and frequency-dependent. In case of the two antenna elements AE1, AE2 at the first base station BS1 and the third antenna element AE3 at the first mobile station MS1 a relation between the transmission vector $\underline{s}$ for the transmitted first reference signals, the MISO channel vector $\underline{H}$ and the reception scalar $g1$ is given by following equation:

$$g1 = \underline{H} * \underline{s} = \begin{pmatrix} h11 & h12 \end{pmatrix} * \begin{pmatrix} s1 \\ s2 \end{pmatrix}$$

Due to orthogonal transmission of the first reference signals from the antenna elements AE1, AE2 there are two equations for elements $h11$ and $h12$ of the MISO channel vector $\underline{H}$ :

$$g1 = h11 * s1$$

$$g1 = h12 * s2$$

The first mobile station MS1 can calculate the elements $h11$ and $h12$ of the MISO channel vector $\underline{H}$ based on the reception scalar $g1$ determined beforehand in the step M1/2 and based on the transmission vector $\underline{s}$.

In case of two reception antenna elements at a mobile station a relation between the transmission vector $\underline{s}$, a reception vector $\underline{g}$ and a MIMO channel matrix $\underline{H'}$ would be given by the following equation:

$$\underline{g} = \begin{pmatrix} g1 \\ g2 \end{pmatrix} = \underline{H}' * \underline{s} = \begin{pmatrix} h11 & h12 \\ h21 & h22 \end{pmatrix} * \begin{pmatrix} s1 \\ s2 \end{pmatrix}$$

In a next step M1/4, the first mobile station MS1 calculates received carrier powers $P\_S\_i$ for each allowed precoding vector. Such received carrier powers $P\_S\_i$ can be for example average received modulated carrier powers. The first mobile station MS1 calculates scalars $h1\_i'$ of equivalent channels (also known as effective channels) for each precoding vector $\underline{wBli}(i=1,2,3,4)$ by multiplying the calculated MISO channel vector $\underline{H}$ with each precoding vector $\underline{wBli}$ (i = 1,2,3,4) of the table 1:

$$\underline{h1\_i'} = \underline{H} * \underline{wBli} = \begin{pmatrix} h11 & h12 \end{pmatrix} * \begin{pmatrix} w1\_i \\ w2\_i \end{pmatrix}, (i = 1..N)$$

$N$ is the number of the allowed precoding vectors and is equal to four according to the exemplary precoding vector selection of the table 1.

In a further step M1/5, the first mobile station MS1 determines a downlink beam with a largest received carrier power, a best downlink beam in the following, by calculating squared absolute values of each scalar $h1\_i$ and averaging the squared absolute values over a certain time for a certain amount of received first reference signals.

According to Figure 4 the third downlink beam DB3 should be exemplarily the best downlink beam for the first mobile station MS1.

Results of the calculation correspond to average received modulated carrier powers $P\_S\_i$:

$$P\_S\_i = \left| h1\_i' \right|^2, i = 1..N$$

In a further step M1/6, the first mobile station MS1 determines a downlink beam with a fewest received carrier power, a best companion downlink beam in the following.

According to Figure 4 the first downlink beam DB1 generating least interference to the best downlink beam should be exemplarily the best companion downlink beam for the first mobile station MS1.

In case of two reception antenna elements at a mobile station and $N$ allowed precoding vectors $\underline{wBli}$, relations between vectors $\underline{h_i''} = (h1\_i'', h2\_i'')$ for the equivalent channels, the MIMO channel matrix $\underline{H}'$ and the precoding vectors $\underline{wBli}$ would be given by following equations:

$$\underline{h_i''} = \begin{pmatrix} h1\_i'' \\ h2\_i'' \end{pmatrix} = \underline{H} * \underline{wBli} = \begin{pmatrix} h11 & h12 \\ h21 & h22 \end{pmatrix} * \begin{pmatrix} w1\_i \\ w2\_i \end{pmatrix}, i = 1..N$$

In a further step M1/7, the first mobile station MS1 transmits the first feedback information via the first uplink channel UL1 to the first base station BS1. One of the beam indexes of table 1 is used as a first component of the first feedback information for indicating the best downlink beam and another of the beam indexes of table 1 is used as a second component of the first feedback information for indicating the best companion downlink beam.

In a next step M1/8 the first base station BS1 receives the first feedback information from the first mobile station MS1.

The second mobile station MS2 and the third mobile station MS3 perform the steps M1/2, M1/3, M1/4, M1/5, M1/6, and M1/7 at the same time or already have performed them or will perform them afterwards.

For the second mobile station MS2 according to Figure 4, the first downlink beam DB1 should be exemplarily the best downlink beam and the fourth downlink beam DB4 should be exemplarily the best companion downlink beam in the second feedback information. For the third mobile station MS3, the fourth downlink beam DB4 should be exemplarily the best downlink beam and the first downlink beam DB1 should be exemplarily the best companion downlink beam in the third feedback information.

In a further step M1/9, the first base station BS1 uses the first feedback information, the second feedback information, and the third feedback information to build at least one mobile station set with at least two mobile stations, which can be scheduled with downlink data within a same frequency/time resource or within a same frequency/time/code resource. The step M1/9 can only be performed if at least two mobile stations have reported feedback information preferably within a specific time frame.

In following table 2 the best downlink beams for the mobile stations MS1, MS2, MS3 are indicated by ↑ and the best companion downlink beams for the mobile stations MS1, MS2, MS3 are indicated by ↓.

Table 2

|  | first mobile station MS1 | second mobile station MS2 | third mobile station MS3 |
|---|---|---|---|
| first downlink beam DB1 | ↓ | ↑ | ↓ |
| second downlink beam DB2 |  |  |  |
| third downlink beam DB3 | ↑ |  |  |
| fourth downlink beam DB4 |  | ↓ | ↑ |

A mobile station set with two mobile stations consists of a first one of the mobile stations MS1, MS2, and MS3 having a specific downlink beam as the best downlink beam, which is at the same time the best companion downlink beam for a second one of the mobile stations MS1, MS2, and MS3 being not the same as the first one and wherein the first one has another downlink beam as the best companion downlink beam, which is at the same time the best downlink beam for the second one. According to the table 2 the mobile station set selected by the first base station BS1 consists of the second mobile station MS2 as the first set station and the third mobile station MS3 as the second set station, whereas the first downlink beam DB1 and the fourth downlink beam DB4 are used for the same frequency/time resource or used for the same frequency/time/code resource.

Using the first feedback information, the second feedback information, and the third feedback information with indications only for the best downlink beam and the best companion downlink allows the first base station BS1 to build mobile station sets without a requirement to report a classification or ranking for all downlink beams DB1, DB2, DB3, and DB4 into best downlink beams and best companion downlink beams by all mobile stations MS1, MS2, and MS3. Furthermore, it is not required to report additional parameters like for example channel quality indications for each downlink beam DB1, DB2, DB3, and DB4.

If only one mobile station is located in the first sector SEC1 and transmits feedback information to the first base station BS1, then no mobile station set can be build. Generally, if there are only few mobile stations within the first sector SEC1, there are usually enough resources that a building of mobile station sets is not absolute necessity. Likewise, if there is a mixture of a first group of mobile stations with functionality according to the embodiments of the invention and a second group of mobile stations without such functionality, then the mobile stations of the first group are used to build mobile station sets with a method according to the invention and the mobile stations of the second group use a well-known method for building mobile station set or are scheduled without using a mobile station set.

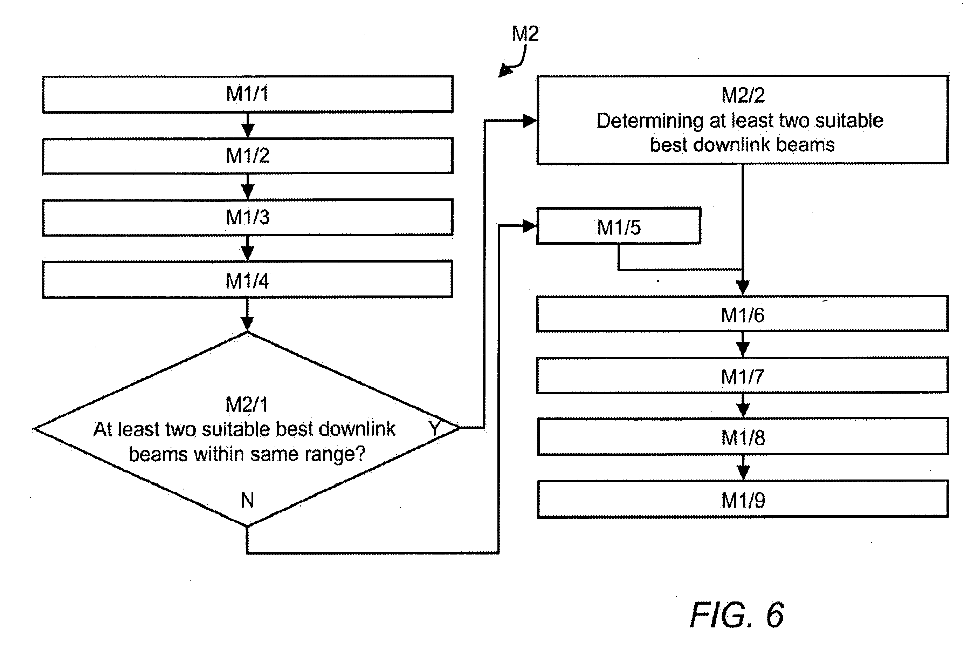

Figure 6 shows a first alternative method M2 for use in the first radio communication system RCS1 according to a second embodiment of the invention. The steps shown in Figure 6 that correspond to the steps of the Figure 5 have been designated by same reference numerals.

The first alternative method M2 will be used as an improvement, if there are enough mobile stations within the first sector SEC1 to use the building of mobile station sets, but the nature of distribution of the mobile stations and/or the form of the coverage areas of the downlink beams DB1, DB2, DB3, and DB4 is in such a way, that no adequate mobile station sets can be build according to the first embodiment of the invention. To enable the building of mobile station sets in such cases, the feedback information will be extended with a further index for being able to report two suitable best downlink beams.

In addition to the steps M1/1, M1/2, M1/3, M1 /4, M1 /5, M1/6, M1 /7, M1/8, and M1/9 performed in the first embodiment of the invention, in the second embodiment of the invention following step M2/1 is performed after the step M1/4 and either the step M1 /5 or step M2/2 is performed after the step M2/1.

In the further step M2/1 the first mobile station MS1 verifies if at least two downlink beams have an average received modulated carrier power $P\_S\_i$ above a first threshold value or in a first range, referred to as suitable best downlink beams or first downlink beams in the following. If not at least two suitable best downlink beams exist, the step M1 /5 is the next step after the step M2/1. If at least two suitable best downlink beams exits, the step M2/2 is the next step.

In the next step M2/2 the first mobile station MS1 selects at least two suitable best downlink beams. With respect to the exemplary beam constellation of Figure 4 the second downlink beam DB2 and the third downlink beam DB3 should be suitable best downlink beams for the first mobile station MS1. The beam indexes of the suitable best downlink beams are used as at least two first components of the first feedback information.

The step M1/6 is the next step after the step M2/2.

The second mobile station MS2 and the third mobile station MS3 expand the second feedback information and the third feedback information with at least one additional first component in a similar way, if at least two downlink beams have an average received modulated carrier power $P\_S\_i$ above the first threshold value or in the first range.

The use of the at least two suitable best downlink beams according to the second embodiment of the invention can improve the selection of mobile station sets if capacity for enlarged feedback reporting is available. Whereas the first embodiment of the invention is primarily used for a large number of mobile stations or large load within a cell, the second embodiment of the invention can be used also for a smaller number of mobile stations within the cell or for an improper mapping of mobile station locations to coverage areas of downlink beams to enhance the possibility for finding adequate mobile station sets.

Mobile stations not capable of performing the first alternative method M2 will work with the method M1 according to the first embodiment of the invention. The same applies for other alternatives being described in the following.

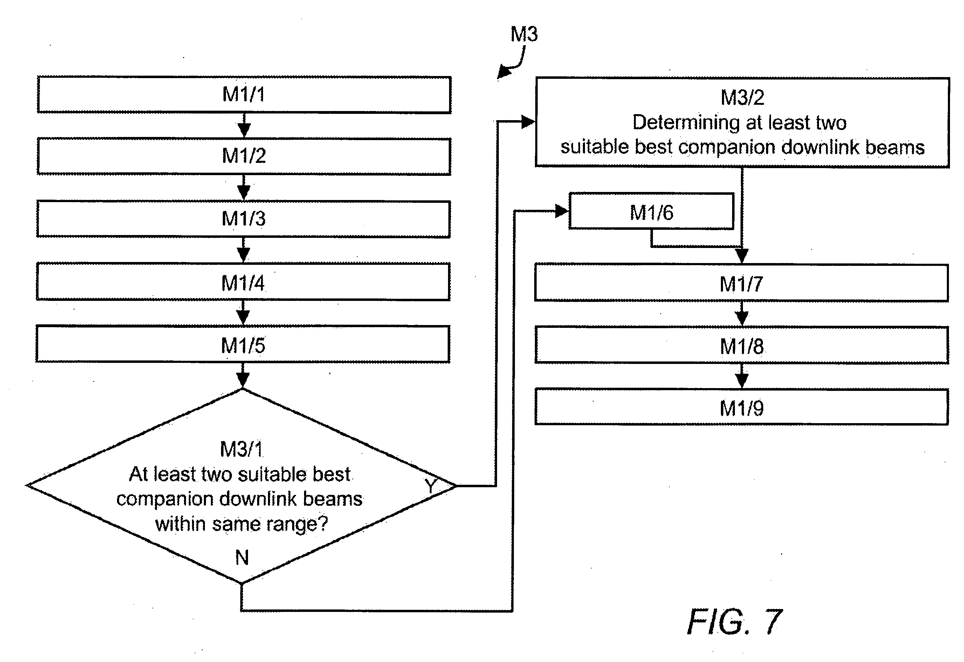

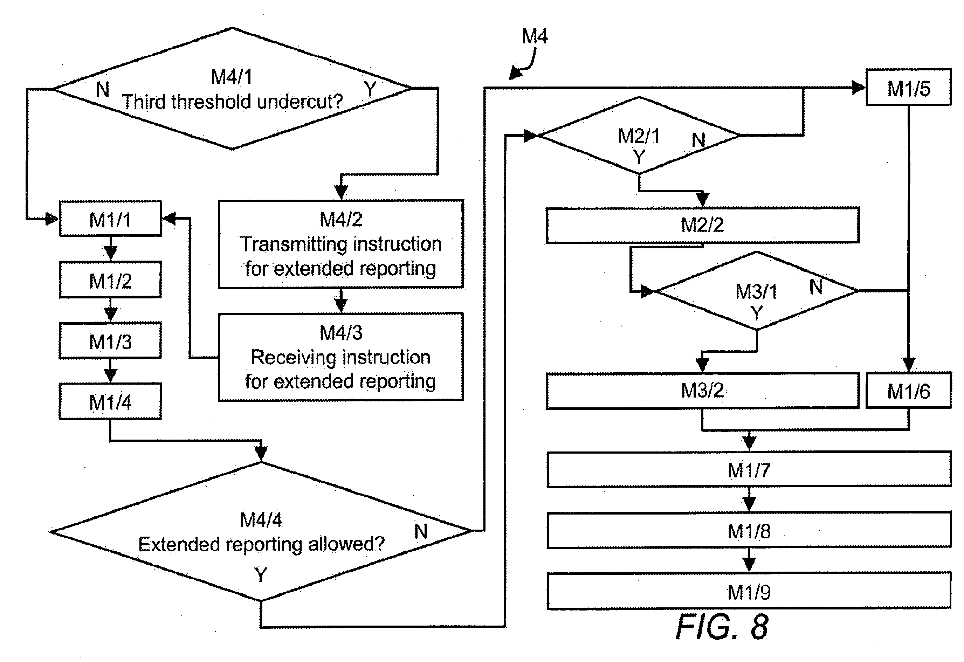

Figure 7 shows a second alternative method M3 for use in the first radio communication system RCS1 according to a third embodiment of the invention. The steps shown in Figure 8 that correspond to the steps of the Figure 5 have been designated by same reference numerals.

The second alternative method M3 will be used as a similar improvement in comparison to the first alternative method M2, if there are enough mobile stations within the first sector SEC1 to use the building of mobile station sets, but the nature of distribution of the mobile stations and/or the form of the coverage areas of the downlink beams DB1, DB2, DB3, and DB4 is in such a way, that no adequate mobile station sets can be build. The difference to the first alternative method M2 is, that the feedback information will be extended with a further index for being able to report two suitable companion downlink beams instead of two indexes for suitable best downlink beams.

In addition to the steps M1/1, M1/2, M1/3, M1/4, M1/5, M1/6, M1/7, M1/8, and M1 /9 performed in the first embodiment of the invention, in the third embodiment of the invention following step M3/1 is performed after the step M1 /5 and either the step M1 /6 of step M3/2 is performed after the step M3/1.

In the further step M3/1 the first mobile station MS1 verifies if at least two downlink beams have an average received modulated carrier power $P\_S\_i$ below a second threshold value or in a second range, referred to as suitable companion downlink beams or second downlink beams in the following. If not at least two suitable companion downlink beams exist, the step M1/6 is the next step after the step M3/1. If at least two suitable companion downlink beams exits, the step M3/2 is the next step.

In the next step M3/2, the first mobile station MS1 selects at least two suitable companion downlink beams. With respect to the exemplary beam constellation of Figure 4 the first downlink beam DB1 and the fourth downlink beam DB4 should be suitable companion downlink beams for the first mobile station MS1. The beam indexes of the suitable companion downlink beams are used as at least two second components of the first feedback information.

The step M1/7 is the next step after the step M3/2.

The second mobile station MS2 and the third mobile station MS3 expand the second feedback information and the third feedback information with at least one additional second component in a similar way, if at least two downlink beams have an average received modulated carrier power $P\_S\_i$ below the second threshold value or in the second range.

The use of at least two suitable companion downlink beams according to the third embodiment of the invention improves the selection of mobile station sets in a similar way as the use of at least two suitable best downlink beams.

Figure 8 shows a third alternative method M4 for use in the first radio communication system RCS1 according to the fourth embodiment of the invention. The steps shown in Figure 8 that correspond to the steps of the Figure 6 and Figure 7 have been designated by same reference numerals.

The third alternative method M4 is a combination of features of the first alternative method M2 and the second alternative method M3. If there are only few mobile stations within the first sector SEC1, a possibility to find mobile stations for adequate mobile station sets is very low. In a situation with few mobile stations in the first sector SEC1, downlink data can be scheduled trouble-free without building mobile station sets, but it exists an improvement, if the first base station BS1 schedules the few mobile stations in parallel to have more time slots for power saving in the first base station BS1.

The difference to the first alternative method M2 and the second alternative method M3 is, that the feedback information can be extended with at least two indexes for the suitable best downlink beams and with at least another two indexes for the suitable best companion downlink beams.

In addition to the steps M1/1, M1/2, M1/3, M1/4, M1/5, M1/6, M1/7, M1/8, M1/9, M2/1, M2/2, M3/1, and M3/2 performed in the first, the second, and the third embodiment of the invention, in the fourth embodiment of the invention following step M4/1 is performed before the step M1/1, steps M4/2 and M4/3 are performed optionally between the step M4/1 and the step M1/1, and step M4/4 is performed after the step M1/4.

In the further step M4/1, the first base station BS1 verifies if a third threshold is undercut. The third threshold can be for example a third specific total number of mobile stations within the first sector SEC1.

If the third threshold is not undercut, the step M1/1 is the next step.

If the third threshold is undercut, the first base station BS1 transmits in addition to the first reference signals of the step M1/1, an instruction for an extended feedback reporting to the first mobile station MS1.

In the further step M4/3, the first mobile station MS1 receives the instruction from the first base station BS1.

In the further step M4/4 after the step M1/4, the first mobile station MS1 verifies if an extended feedback reporting is allowed.

If the extended feedback reporting is not allowed, the step M1 /5 is the next step.

If the extended feedback reporting is allowed, the step M2/1 is the next step.

According to the fourth embodiment of the invention, the beam indexes of the suitable best downlink beams are used as at least two first components of the first feedback information and the beam indexes of the suitable best companion downlink beams are used as at least two second components of the first feedback information.

The second mobile station MS2 and the third mobile station MS3 can expand the second feedback information and the third feedback information with at least two first components and/or at least two second components in a similar way, if the conditions described above for the first mobile station MS1 are also fulfilled for the second mobile station MS2 and/or the third mobile station MS3.

In a case of many mobile stations within a cell, a possibility to find adequate mobile stations for mobile station sets is high. But if the total number of mobile stations within the cell is small, the possibility to find adequate mobile stations is low. The possibility can be increased, if not only the beam index of the best downlink beam and the beam index of the best companion downlink beam are reported, but instead at least two beam indexes of at least two suitable best downlink beams and at least two beam indexes of at least two suitable best companion downlink beams are reported. In case of few active mobile stations, there are enough uplink resources for increased feedback reporting in comparison to a situation with many active mobile stations within the cell.

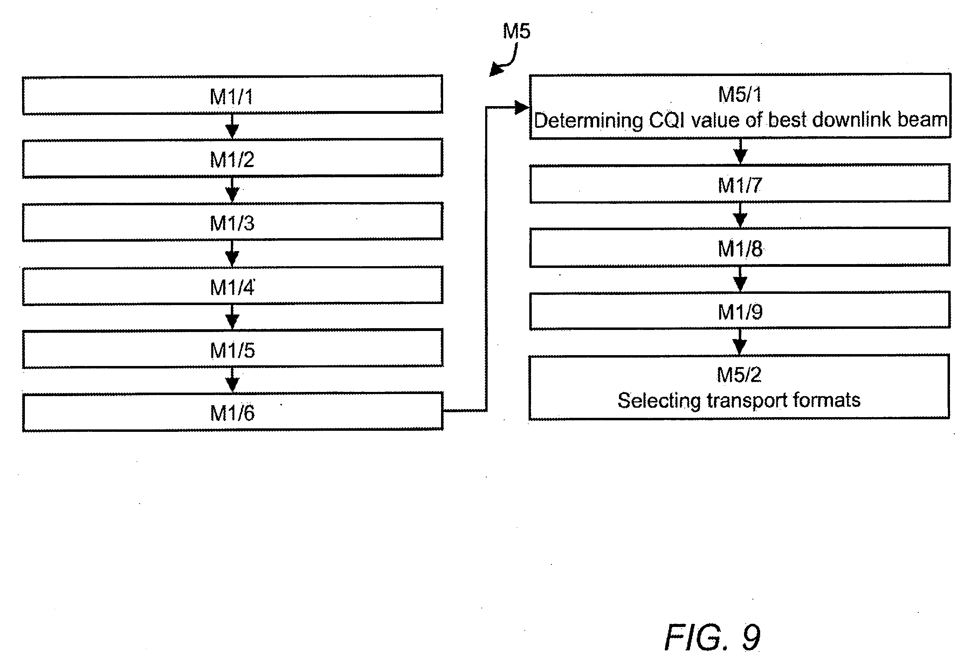

Figure 9 shows a further alternative method M5 for use in the first radio communication system RCS1 according to a fifth embodiment of the invention. The steps shown in Figure 9 that correspond to the steps of the Figure 5 have been designated by same reference numerals.

In addition to building mobile station sets, it is an advantageous if appropriate transport formats for the mobile stations of the mobile station sets can be selected. To enable such selection a further component is included in the feedback information.

In addition to the steps M1/1, M1/2, M1/3, M1/4, M1/5, M1/6, M1/7, M1/8, and M1/9 performed in the first embodiment of the invention, in the fifth embodiment of the invention following step M5/1 is performed between the step M1/6 and the step M1/7 and following step M5/2 is performed after the step M1/9.

In the further step M5/1, the first mobile station MS1 determines a channel quality indication for the best downlink beam. Such channel quality indication can be for example a CQI value. Therefor, the first mobile station MS1 calculates for example an SIR (SIR = signal-to-interference ratio) for the best downlink beam by using following equation:

$$SIR = \frac{P\_S}{P\_I} = \frac{P\_S}{\sum P\_I\_i}$$

The summation is done by not adding up over an estimated average received co-channel interference power of the best downlink beam.

*P_S* is the average received modulated carrier power of the best downlink beam. *P_I* is the estimated average received co-channel interference power of all downlink beams aside from the best downlink beam transmitted from the first base station BS1 and other base stations and *P_I_i* is an estimated average received co-channel interference power of a single downlink beam. Such estimations are an implementation feature of each mobile station manufacturer.

As an alternative, the first mobile station MS1 calculates an SINR (SINR = signal-to-interference-plus-noise ratio) using following equation:

$$SINR = \frac{P\_S}{P\_I + P\_N} = \frac{P\_S}{\sum P\_I\_i + P\_N}$$

$P\_N$ is an estimated average noise power of noise from other radio sources. The noise is typically additive white Gaussian noise (AWGN).

Also the estimation of $P\_N$ is an implementation feature of each mobile station manufacturer.

The CQI value can be determined by the first mobile station MS1 for example by use of following table 3:

Table 3

| CQI value | SIR interval | | SINR interval | |
|:---:|:---:|:---:|:---:|:---:|
| | lower limit, $\geq$ | upper limit, $<$ | lower limit, $\geq$ | upper limit, $<$ |
| 1 | SIR1 | SIR2 | SINR1 | SINR2 |
| 2 | SIR2 | SIR3 | SINR2 | SINR3 |
| 3 | SIR3 | SIR4 | SINR3 | SINR4 |
| 4 | SIR4 | SIR5 | SINR4 | SINR5 |
| 5 | SIR5 | SIR6 | SINR5 | SINR6 |
| 6 | SIR6 | SIR7 | SINR6 | SINR7 |
| 7 | SIR7 | SIR8 | SINR7 | SINR8 |

For the table 3 the following relations are used:

$$SIR1 < SIR2 < SIR3 < SIR4 < SIR5 < SIR6 < SIR7 < SIR8$$

$$SINR1 < SINR2 < SINR3 < SINR4 < SINR5 < SINR6 < SINR7 < SINR8$$

If for example the SIR is within the interval $SIR2 \leq SIR < SIR3$ or the SINR is within the interval $SINR2 \leq SINR < SINR3$, the CQI value of the best downlink beam is 2.

The CQI value of the best downlink beam is used as a third component of the first feedback information.

The second mobile station MS2 and the third mobile station MS3 expand the second feedback information and the third feedback information with a third component in a similar way.

In the further step M5/2, the first base station BS1 selects an appropriate transport format or MCS (MCS = modulation & coding scheme) for the mobile stations MS2, MS3 of the mobile station set according to the CQI values reported within the first feedback information, the second feedback information, and the third feedback information. The selection of the appropriate transport format can be based on a look-up table shown in following table 4:

Table 4

| Transport format/ MCS | CQI interval | |
|:---:|:---:|:---:|
| | lower limit, $\geq$ | upper limit, $<$ |
| QPSK, coding rate 1/3 | CQI1 | CQI2 |

(continued)

| Transport format/ MCS | CQI interval | |
|---|---|---|
| | lower limit, $\geq$ | upper limit, < |
| QPSK, coding rate 2/3 | CQI2 | CQI3 |
| 16-QAM | CQI3 | CQI4 |
| 64-QAM | CQI4 | CQI5 |

In a first column of table 4, different transport formats with different coding rates are listed, wherein a maximum data throughput of the transport formats increases with increasing CQI value interval.

If for example the CQI is within the interval CQI3 $\leq$ CQI < CQI4, the transport format/MCS 16-QAM is selected.

Using the third component additionally in the first feedback information, the second feedback information, and the third feedback information enables the first base station BS1 to select adequate transport formats for the mobile stations of the mobile station sets.

Reporting the channel quality indication only for the best downlink beam reduces considerably a reporting overhead in comparison to a case, where the channel quality indication for all downlink beams are reported and therewith a considerable amount of a maximum uplink capacity of a radio cell or a sector of the radio cell is consumed.

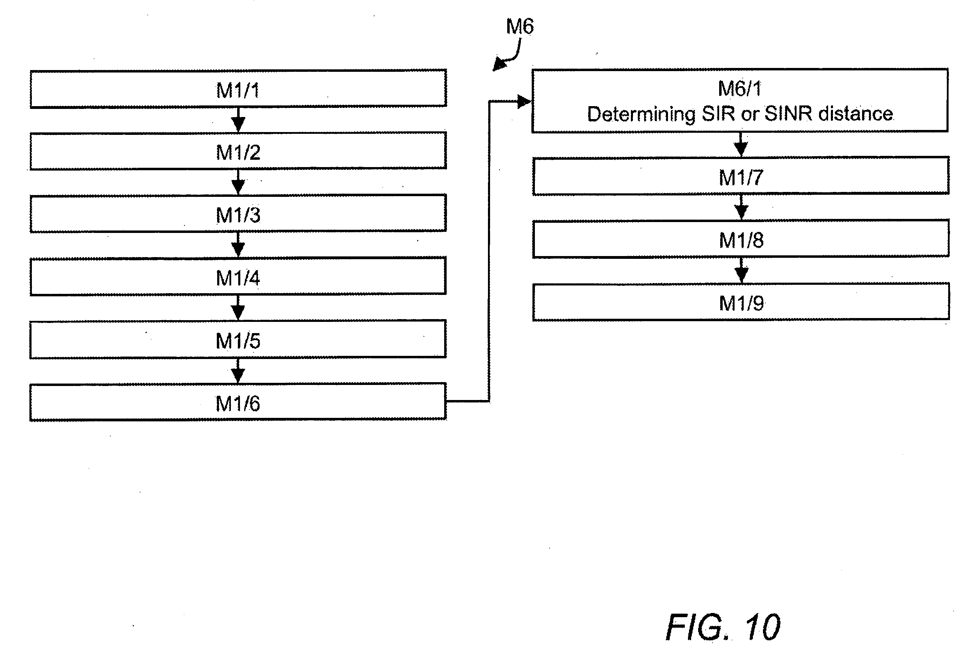

Figure 10 shows yet another alternative method M6 for use in the first radio communication system RCS1 according to a sixth embodiment of the invention. The steps shown in Figure 10 that correspond to the steps of the first embodiment of Figure 5 have been designated by same reference numerals.

The method M6 improves the building of mobile station sets compared to the method M1, because it allows the first base station BS1 to base the building of the mobile station sets not only on the reported indexes of the best downlink beams and best companion downlink beams but also on SIR distances or SINR distances between best downlink beams and best companion downlink beams. The SIR distance or the SINR distance indicate the interference between a reported best downlink beam and a reported best companion downlink beam. If for example one mobile stations reports a specific best downlink beam and a specific best companion downlink beam and two other mobile stations report the same downlink beams but with exchanged best downlink beam and best companion downlink beam, then the first base station BS1 preferably will select that one of the two other mobile stations for the mobile station set for which a larger SIR distance or a larger SINR distance is reported. To enable such an improved building of mobile station sets a further component is included in the feedback information.

In addition to the steps M1/1, M1/2, M1/3, M1/4, M1/5, M1/6, M1/7, M1/8, and M1/9 performed in the first embodiment of the invention, in the sixth embodiment of the invention following step M6/1 is performed between the step M1/6 and the step M1/7.

In the further step M6/1 the first mobile station MS1 determines an SIR distance value $SIR\_dist$ or an SINR distance value $SINR\_dist$ of the best downlink beam with reference to the best companion downlink beam.

The first mobile station MS1 uses for calculation of the SIR distance value $SIR\_dist$ following equation:

$$SIR\_dist = \frac{P\_S\_bestbeam}{P\_S\_bestcompanionbeam}$$

$P\_S\_bestbeam$ is the average received modulated carrier power of the best downlink beam and $P\_S\_bestcompanionbeam$ is the average received modulated carrier power of the best companion downlink beam.

For the SINR distance value $SINR\_dist$ the first mobile station MS1 uses following equation:

$$SINR\_dist = \frac{P\_S\_bestbeam}{P\_S\_bestcompanionbeam + P\_N}$$

The SIR distance value $SIR\_dist$ or the SINR distance value $SINR\_dist$ are used as a fourth component of the first feedback information. The second mobile station MS2 and the third mobile station MS3 expand the second feedback information and the third feedback information with the fourth component in a similar way.

Reporting such signal-to-interference ratio information or such signal-to-noise-plus-interference ratio information only for the best companion downlink beam reduces considerably a reporting overhead in comparison to a case, where the signal-to-interference ratio information or the signal-to-noise-plus-interference ratio information for all downlink beams are reported and therewith a considerable amount of a maximum uplink capacity of a radio cell or a sector of the radio cell is consumed.

For example for a 3 bit codebook with 8 different precoding vectors, reporting only the signal-to-interference ratio information or the signal-to-noise-plus-interference ratio information for the best companion downlink beam reduces the overhead according the signal-to-interference ratio information or the signal-to-noise-plus-interference ratio information by a factor of 6 (not 7 because one of the 8 precoding vectors is related to the best downlink beam).

A further preferred method is to combine the method M5 and the method M6, which allows on the one hand improving the building of mobile station sets and allows on the other hand selecting adequate transport formats for the mobile stations of the mobile station set.

Calculations of the SIR distance value *SIR_dist* or the SINR distance value *SINR_dist* can be based on received common pilots as described above or the mobile station performing the calculations assumes that another mobile station will be scheduled via the best companion downlink beam when itself it will be scheduled via the best downlink beam. For the second case a smaller SIR distance value *SIR_dist* or a smaller SINR distance value *SINR_dist* will be reported and this information can be used for link adaptation, thus in improving the selection of an appropriate transport format for the mobile stations MS1, MS2, and MS3.

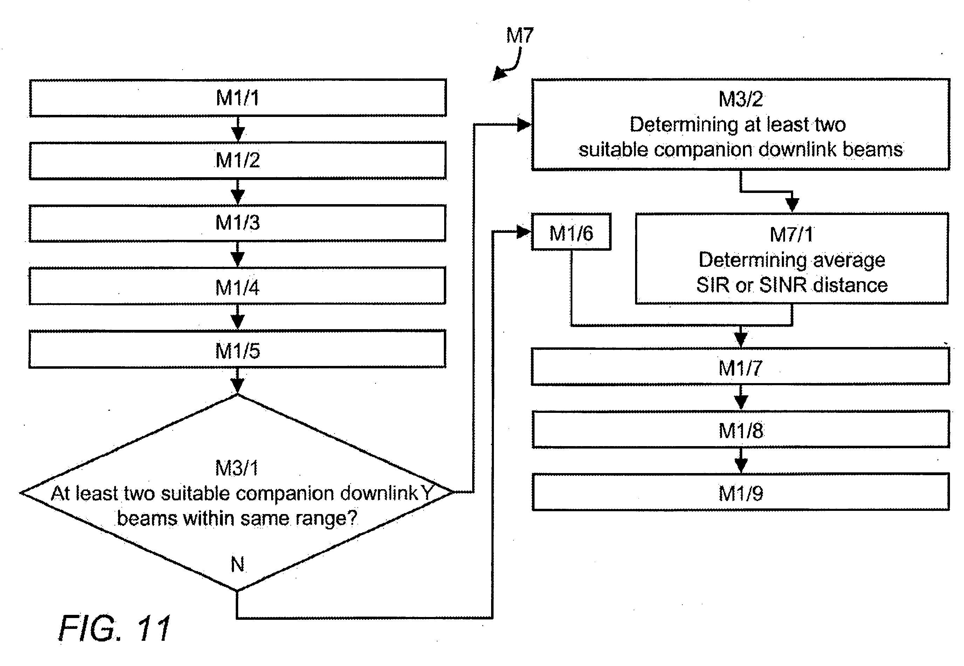

Figure 11 shows a method M7 as an improved alternative of the method M3 for use in the first radio communication system RCS1 according to a seventh embodiment of the invention. The steps shown in Figure 11 that correspond to the steps of the Figure 7 have been designated by same reference numerals.

The method M7 improves the building of mobile station sets similar to the method M6, if at least two suitable companion downlink beams are reported as being used in the method M3. To avoid reporting of an SIR distance value or an SINR distance value for each suitable companion downlink beam, an average SIR distance value or an average SINR distance value is determined and reported.

In addition to the steps M1/1, M1/2, M1/3; M1/4, M1/5, M1/6, M1/7, M1/8, M1/9, M3/1, and M3/2, step M7/1 is performed after the step M3/2.

The first mobile station MS1 determines in the step M7/1 an average SIR distance value *SIR_dist_average* or an average SINR distance value *SINR_dist_average.*

The average SIR distance value *SIR_dist_average* is for example given by following equation, if there are $N\_sc$ suitable companion downlink beams:

$$SIR\_dist\_average = \frac{\sum \frac{P\_S\_bestbeam}{P\_S\_suitablecompanionbeam\_i}}{N\_sc}$$

*P_S_suitablecompanionbeam_i* is an average received modulated carrier power of one of the suitable companion downlink beams.

For the average SINR distance value *SINR_dist_average* the first mobile station MS1 can use for example following equation, if there are *N_sc* suitable companion downlink beams:

$$SINR\_dist\_average = \frac{\sum \frac{P\_S\_bestbeam}{P\_S\_suitablecompanionbeam + P\_N}}{N\_sc}$$

The average SIR distance value *SIR_dist_average* or the average SIR distance value *SIR_dist_average* is used as the fourth component of the first feedback information according to the seventh embodiment of the invention.

The second mobile station MS2 and the third mobile station MS3 expand the second feedback information and the third feedback information with a fourth component in a similar way.

As mentioned beforehand, using the average SIR distance value *SIR_dist_average* or the average SINR distance value *SINR_dist_average* according to the seventh embodiment of the invention avoids to reporting separate SIR distance values *SIR_dist* or SINR distance values *SINR_dist* for each suitable best companion downlink beam.

A further improved alternative of the method M1 allows interference coordination between sectors of a radio cell with objectives to reduce or avoid interference between the sectors.

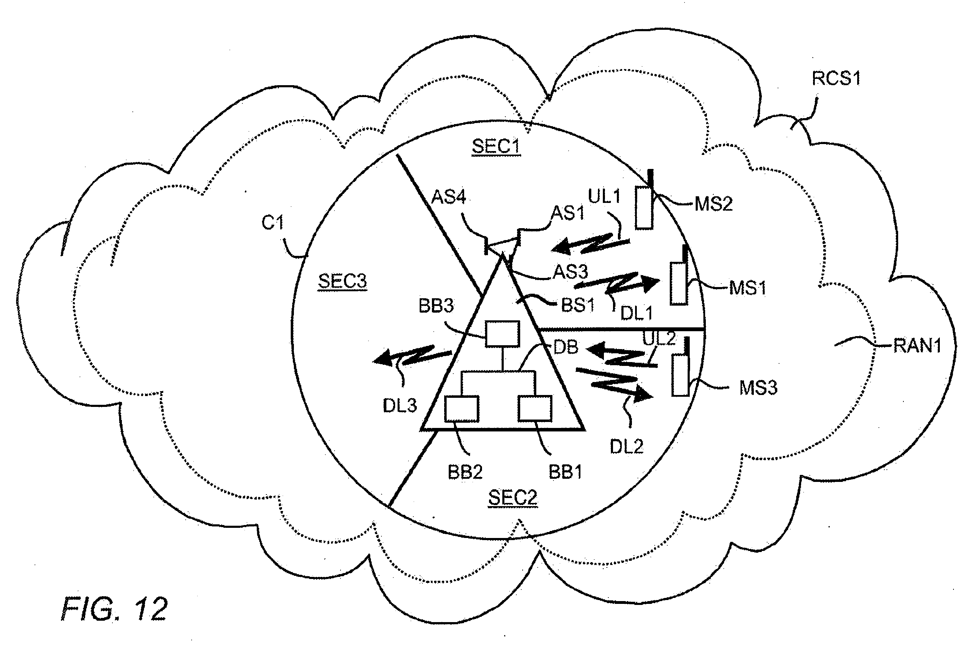

Figure 12 shows the first radio communication system RCS1 according to an eight embodiment of the invention. The elements shown in Figure 12 that correspond to elements of the Figure 1 have been designated by same reference numerals.

The first radio communication system RCS1 comprises the first radio access network RAN1. The first radio access network RAN1 comprises the first radio cell C1 with the first base station BS1. The first radio cell C1 is split into the first sector SEC1, a second sector SEC2 and a third sector SEC3.

In comparison to the first embodiment of the invention, the first base station BS1 further contains a third antenna system AS3 for the second sector SEC2, and a fourth antenna system AS4 for the third sector SEC3. Furthermore, the first base station BS1 contains a first baseband board BB1 used for the first sector SEC1, a second baseband board BB2 used for the second sector SEC2, and a third baseband board BB3 used for the third sector SEC3.

The first baseband board BB1, the second baseband board BB2, and the third baseband board BB3 are connected to each other via a data bus DB. The baseband boards BB1, BB2, and BB3 can be also connected by pairwise connections.

The first mobile station MS1 and the second mobile station MS2 are located within the first sector SEC 1. The first mobile station MS1 and the second mobile station MS2 are connected to the first base station BS1 via the first downlink channel DL1 and the first uplink channel UL1.

The third mobile station MS3 is located within the second sector SEC2. The third mobile station MS3 is connected to the first base station BS1 via a second downlink channel DL2 and a second uplink channel UL2.

A third downlink channel DL3 is used in the third sector SEC3.

Further mobile stations, further downlink channels, and further uplink channels are not shown for simplification.

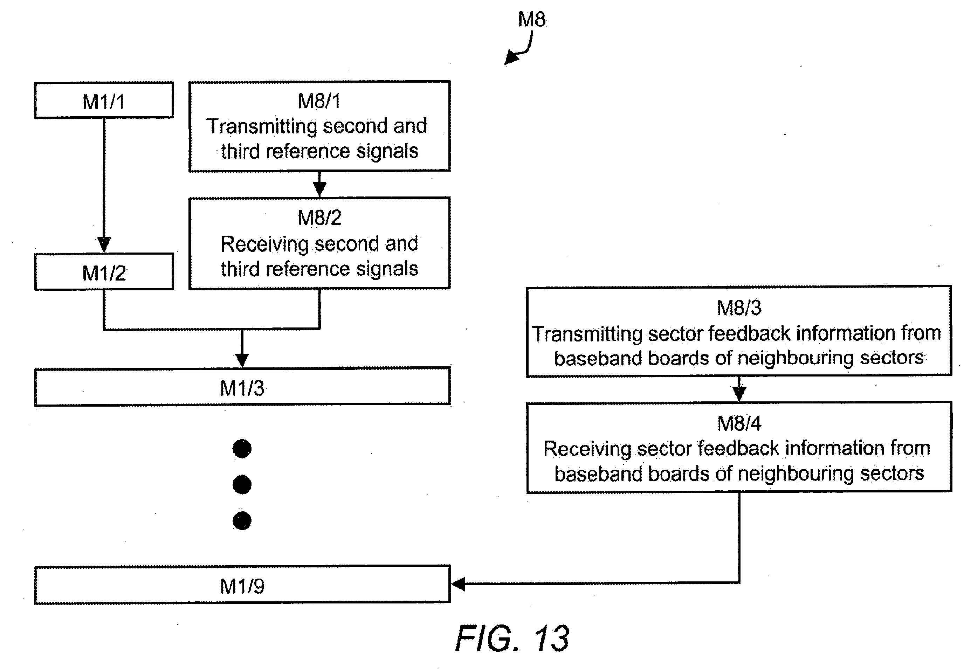

Figure 13 shows a method M8 of the first radio communication system RCS1 according to the eighth embodiment of the invention. The steps shown in Figure 13 that correspond to the steps of the Figure 5 have been designated by same reference numerals.

In addition to the steps M1/1, M1/2, M1/3, M1/4, M1/5, M1/6, M1/7, M1/8, and M1/9 performed in the first embodiment of the invention, in the eighth embodiment of the invention following steps M8/1 and M8/2 are performed in parallel to the steps M1/1 and M1/2 and following steps M8/3 and M8/4 are performed before the step M1/9. Three points shown between the steps M1/3 and M1/9 represent the steps M1/4, M1/5, M1/6, M1/7, and M1/8 not shown in Figure 13.

In the further step M8/1 the first base station BS1 transmits second reference signals for the second sector SEC2, and third reference signals for the third sector SEC3.

The first mobile station MS1 is able to receive the second reference signals and the third reference signals in the further step M8/2.

There are several cases for the first mobile station MS1 to determine the first feedback information according to the eighth embodiment of the invention.

In a first case the first feedback information is similar to the first embodiment of the invention with a beam index of a best downlink beam belonging to the first sector SEC1 and with a beam index of a best companion downlink beam belonging to the second sector SEC2.

In a second case the first feedback information is similar to the second embodiment of the invention with at least two suitable best downlink beams belonging to the first sector SEC1 and the best companion downlink beam belonging to the second sector SEC2.

In a third case the first feedback information is similar to the third embodiment of the invention with the best downlink beam belonging to the first sector SEC1 and at least two suitable companion downlink beams belonging to the second sector SEC2.

In a fourth case the first feedback information comprises at least two suitable best downlink beams belonging to the first sector SEC 1 and two suitable companion downlink beams with one suitable companion downlink beam belonging to the second sector SEC2 and another suitable companion downlink beam belonging to the third sector SEC3.

Further cases with other combinations of downlink beams belonging to the sectors SEC1, SEC2, and SEC3 are possible.

The second mobile station MS2 and the third mobile station MS3 operate in a similar way.

In the further step M8/3, the second baseband board BB2 and the third baseband board BB3 transmit sector feedback information of mobile stations being served within the second sector SEC2 or the third sector SEC3 via the data bus DB.

Generally, feedback information of a mobile station served within a specific sector can be transmitted as at least one part of the sector feedback information to all neighbouring sectors belonging to the same base station. The sector feedback information can also comprise feedback information received from all mobile stations within the specific sector.

In the next step M8/4 the first baseband board BB1 receives the sector feedback information.

In the step M1/9, the first baseband board BB1 of the first base station BS1 uses the sector feedback information received via the second baseband board BB2 and/or the third baseband board BB3 in addition to the first feedback information and the second feedback information directly received from the first mobile station MS1 and the second mobile station MS2 to improve the building of mobile station sets in multi-sector environments. The first baseband board BB1, the second baseband board BB2, and the third baseband board BB3 of the first base station BS1 work in such a way, that building a mobile station set in one of the sectors SEC1, SEC2, and SEC3 generates fewest crosstalk to connections between the first base station BS1 and mobile stations in the other sectors.

The intra-cell inter-sector spatial interference coordination enhances the overall performance and the overall data throughput of the first radio cell C1.

Similar to the method M8 for sectors of a radio cell yet a further improved alternative of the method M1 according to a ninth embodiment of the invention allows interference coordination between different radio cells of a radio access network with objectives to reduce or to avoid interference between the radio cells.

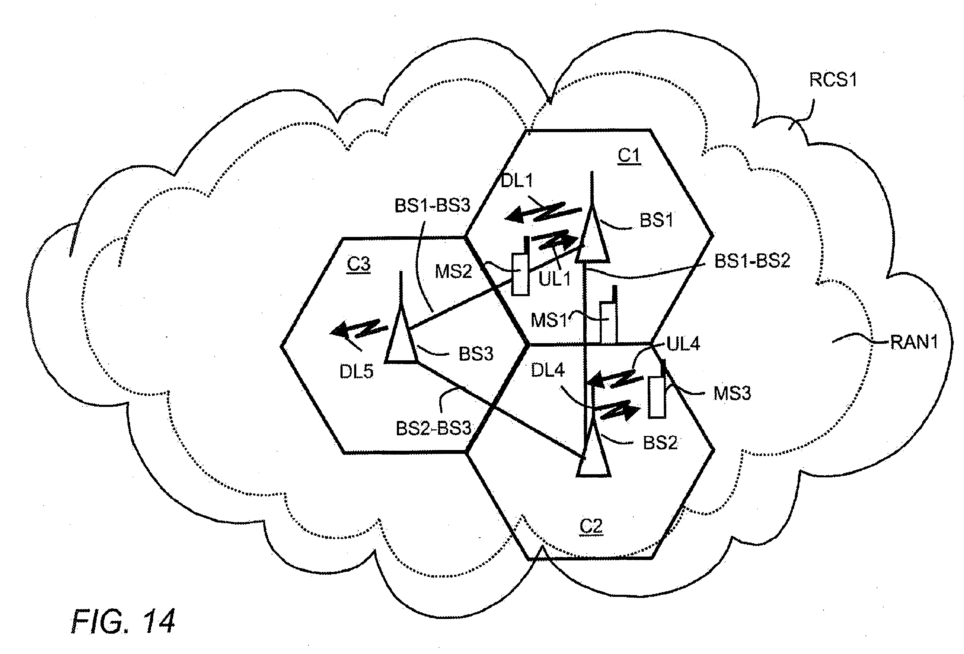

According to the further improved alternative, Figure 14 shows the first radio communication system RCS1. The first radio communication system RCS1 comprises the first radio access network RAN1. The first radio access network RAN1 contains the first radio cell C1, a second radio cell C2, and a third radio cell C3. The elements shown in Figure 14 that correspond to elements of the first embodiment of Figure 1 have been designated by same reference numerals.

The first radio cell C1 contains the first base station BS1, the first mobile station MS1 and the second mobile station MS2. The second radio cell C2 contains a second base station BS2 and the third mobile station MS3. The third radio cell C3 contains a third base station BS3.

Comparable to the first base station BS1 used for the first radio cell C1, the second base station BS2 is used for the second radio cell C2 and the third base station BS3 is used for the third radio cell C3.

The first base station BS1 and the second base station BS2 are inter-connected by a first connection line BS1-BS2. The first base station BS1 and the third base station BS3 are inter-connected by a second connection line BS1-BS3. The second base station BS2 and the third base station BS3 are inter-connected by a third connection line BS2-BS3.

The third connection line BS2-BS3 is not necessary, if information exchange between the second base station BS2 and the third base station BS3 is forwarded via the first base station BS1.

The first mobile station MS1 and the second mobile station MS2 are served via the first downlink channel DL1 and the first uplink channel UL1 by the first base station BS1. The third mobile station MS3 is served via a fourth downlink channel DL4 and a fourth uplink channel UL4 by the second base station BS2.

A fifth downlink channel DL5 is used in the third radio cell C3.

Further mobile stations, further downlink channels, and further uplink channels are not shown for simplification.

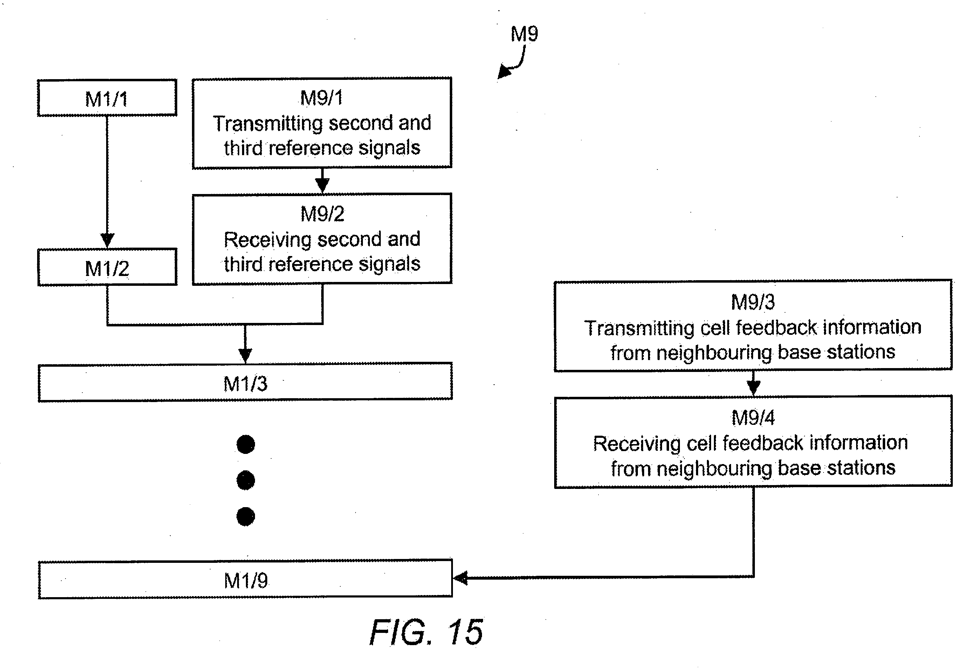

Figure 15 shows a method M9 for use in the first radio communication system RCS1 according to the ninth embodiment of the invention. The elements shown in Figure 15 that correspond to elements of the first embodiment of Figure 5 have been designated by same reference numerals. Three points shown between the step M1/3 and the step M1/9 represent the steps M1/4, M1/5, M1/6, M1/7, and M1/8 not shown in Figure 15.

In addition to the steps M1/1, M1/2, M1/3, M1/4, M1/5, M1/6, M1/7, M1/8, and M1/9 performed in the first embodiment of the invention, in the ninth embodiment of the invention following steps M9/1 and M9/2 are performed in parallel to the steps M1/1 and M1/2 and steps M9/3 and M9/4 are performed before the step M1/9.

In the further step M9/1 the second base station BS2 transmits the second reference signals for the second radio cell C2 and the third base station BS3 transmits the third reference signals for the third radio cell C3.

The first mobile station MS1 is able to receive the second reference signals and the third reference signals in the further step M9/2.

There are several cases for the first mobile station MS1 to determine the first feedback information according to the ninth embodiment of the invention. In a first case the first feedback information is similar to the first embodiment of the invention with a beam index of a best downlink beam belonging to the first radio cell C1 and with a beam index of a best companion downlink beam belonging to the second radio cell C2.

In a second case the first feedback information is similar to the third embodiment of the invention with at least two suitable companion downlink beams belonging to the second radio cell C2.

In a third case the first feedback information comprises at least two suitable downlink beams one suitable downlink beam belonging to the second radio cell C2 and another suitable downlink beam belonging to the first radio cell C1.

The second mobile station MS2 and the third mobile station MS3 operate in a similar way.

In the further step M9/3, the second base station BS2 and the third base station BS3 transmit cell feedback information of mobile stations being served by the second base station BS2 or the third base station BS3 to the first base station BS1 via the first connection line BS1-BS2 and/or the second connection line BS1-BS3.

Generally, feedback information of a mobile station served by a specific base station can be transmitted as at least one part of the cell feedback information to all neighbouring base stations of the specific base station. The cell feedback information can also comprise feedback information received from all mobile stations connected to the specific base station.

In the next step M9/4 the first base station BS1 receives the cell feedback information.

In the step M1/9 the first base station BS1 uses the cell feedback information in addition to the first feedback information and the second feedback information directly received from the first mobile station MS1 and the second mobile station MS2 to improve the building of mobile station sets in multi-cell environments. The base stations BS1, BS2, and BS3 work with each other in such a way, that building a mobile station set in one of the radio cells C1, C2, and C3 generates fewest crosstalk to radio connections between base stations and mobile stations in the other cells.

The inter-cell spatial interference coordination enhances the overall performance and the overall data throughput of the first radio access network RAN 1.

In yet another preferred alternative according to a tenth embodiment of the invention an operation and maintenance centre is used to configure in a fixed way for a radio cell or a sector of the radio cell, for example which components should be used in the feedback information and how many components can be used at most in the feedback information sent from the mobile stations to the base stations.

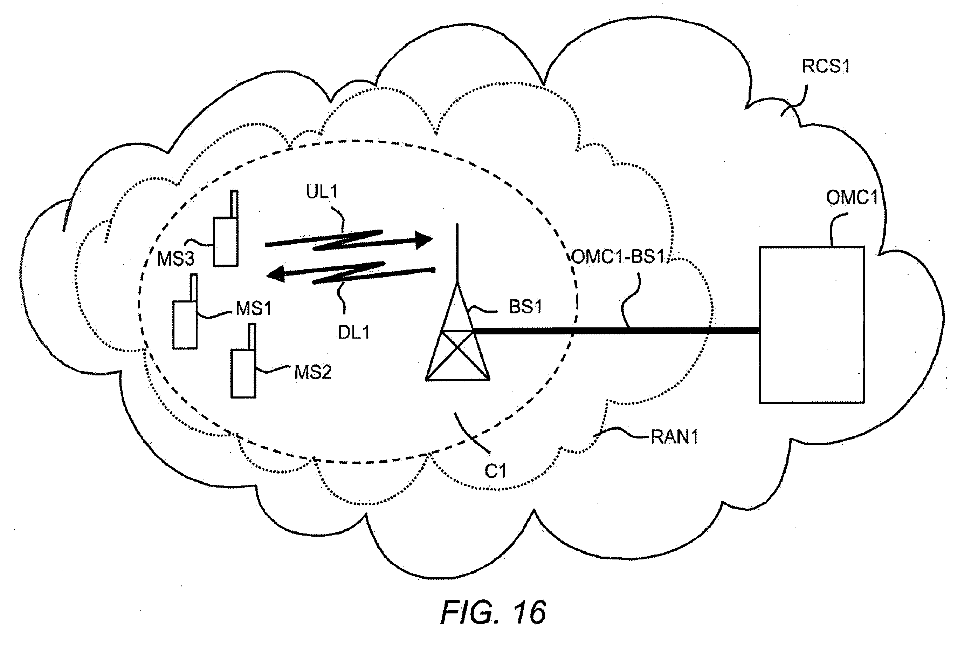

Referring to Figure 16 the first radio communication system RCS1 contains the first radio access network RAN1 and an OMC (OMC = operation and maintenance centre) OMC1. The elements in the embodiment shown in Figure 16 that correspond to elements of the embodiment of Figure 1 have been designated by same reference numerals.

The OMC OMC1 is connected to the first base station BS1 via a fourth connection line OMC1-BS1.

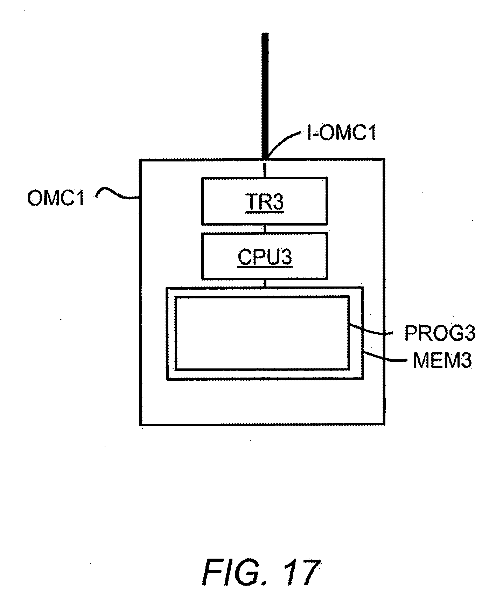

Referring to Figure 17 the OMC OMC1 of Figure 16 contains an interface I-OMC1 to the fourth connection line OMC1-BS1, a third transceiver TR3, a third CPU CPU3, and a third computer readable medium MEM3.

The third transceiver TR3 transmits configuration commands via the fourth connection line OMC1-BS1 to the first base station BS1. Optionally confirmation messages can be transmitted via the fourth connection line OMC1-BS1 from the first base station BS1 to the OMC OMC1.

The third computer readable medium MEM3 is foreseen for storing a third computer readable program PROG3. The third computer readable program PROG3 contains means for adapting feedback configuration parameters of the first base station BS1.

The third computer readable program PROG3 is foreseen for executing steps of a method according to the tenth embodiment of the invention. The third CPU CPU3 is foreseen for executing the third computer readable program PROG3.

The OMC OMC1 determines at least one of the feedback configuration parameters of the first base station BS1. Such feedback configuration parameters are for example the first threshold, the second threshold, the third threshold, the first range, the second range, according to the second, third, fourth, and the seventh embodiment of the invention. Furthermore, the feedback configuration parameters can specify which components and/or the number of components should be used in the first feedback information, the second feedback information, and the third feedback information.

The OMC OMC1 transmits the feedback reporting configuration parameters to the first base station BS1 and the first base station BS1 receives the feedback reporting configuration parameters. For the further operation, the first base station BS1 uses the feedback reporting configuration parameters determined by the OMC OMC1 to configure for example, which and how many components at most can be used in the feedback information of a sector or a radio cell.

Depended on an environment (e.g. rural, urban) of a radio cell or a sector of a radio cell, on a cell size, on an antenna deployment above/below rooftop or based on measurements of average long-term channel properties different feedback reporting configuration parameters must be used for different base stations. For optimisation purposes it is advantageous to be able to configure the feedback reporting configuration parameters of the base stations per remote control by use of the OMC OMC1.

**Claims**

1. A method for building sets of mobile stations in a radio communication system (RCS1), said method comprising the steps of:

transmitting (M1/1) first reference signals from a base station (BS1, BS2, BS3) to at least two mobile stations (MS1, MS2, MS3) for being able to determine properties of a first downlink channel (DL1) between said base station (BS1, BS2, BS3) and said at least two mobile stations (MS1, MS2, MS3);
receiving (M1/2) said first reference signals by said at least two mobile stations (MS1, MS2, MS3);
determining (M1/3, M1/4, M1/5, M1/6) a first feedback information at a first one of said at least two mobile stations (MS1, MS2, MS3) and a second feedback information at a second one of said at least two mobile stations (MS1, MS2, MS3) comprising each a first component indicating a downlink beam with a largest received carrier power of at least two downlink beams (DB1, DB2, DB3, DB4) of said first downlink channel (DL1);
transmitting (M1/7) said first feedback information and said second feedback information from said first one and said second one of said at least two mobile stations (MS1, MS2, MS3) to said base station (BS1, BS2, BS3);
receiving (M1/8) said first feedback information and said second feedback information at said base station (BS1, BS2, BS3); and
building (M1/9) a mobile station set of at least two of said at least two mobile stations (MS1, MS2, MS3) at said base station (BS1, BS2, BS3) according to said first feedback information and said second feedback information, if at least two mobile stations (MS1, MS2, MS3) have reported feedback information,

**characterized by** said first feedback information and said second feedback information further comprise a second component indicating a further downlink beam with a fewest received carrier power of said at least two downlink beams (DB1, DB2, DB3, DB4).

2. The method according to claim 1, **characterized in that** said method further comprises the step of:

verifying (M2/1) by at least one of said at least two mobile stations (MS1, MS2, MS3), if at least two first downlink beams of said at least two downlink beams (DB1, DB2, DB3, DB4) have a received carrier power above a first threshold or within a first range, and
at least said first feedback information or said second feedback information further comprises at least a further first component indicating a second one of said at least two first downlink beams.

3. The method according to claim 1, **characterized in that** said method further comprises the step of:

verifying (M3/1) by at least one of said at least two mobile stations (MS1, MS2, MS3), if at least two second downlink beams of said at least two downlink beams (DB1, DB2, DB3, DB4) have a received carrier power below a second threshold or within a second range, and
at least said first feedback information or said second feedback information further comprises at least a further second component indicating a second one of said at least two second downlink beams.

4. The method according to claim 2 and claim 3, **characterized in that** said first downlink channel (DL1) comprises at least two further downlink beams, and said method further comprises the steps of:

verifying (M4/1) if a third threshold for a number of said at least two mobile stations (MS1, MS2, MS3) connected to said base station (BS1, BS2, BS3) is undercut; and
transmitting (M4/2) an instruction from said base station (BS1, BS2, BS3) to said at least two mobile stations (MS1, MS2, MS3) for reporting said at least two first downlink beams and said at least two second downlink beams of said at least two downlink beams (DB1, DB2, DB3, DB4) and said at least two further downlink beams.

5. The method according to claim 1, **characterized in that** said method further comprises the steps of:

determining (M5/1) a channel quality indication for said downlink beam with the largest received carrier power by said at least two mobile stations (MS1, MS2, MS3); and
selecting (M5/2) a transport format for said at least two mobile stations (MS1, MS2, MS3) at said base station (BS1, BS2, BS3) according to said channel quality indication, and
said first feedback information and said second feedback information further comprises a third component with said channel quality indication.

6. The method according to claim 1, **characterized in that** said method further comprises the step of:

determining (M6/1) a signal-to-interference ratio information or a signal-to-noise-plus-interference ratio information according to said downlink beam with the largest received carrier power and said further downlink beam with the fewest received carrier power,
and said first feedback information and said second feedback information further comprises a fourth component with said signal-to-interference ratio information or said signal-to-noise-plus-interference ratio information.

7. The method according to claim 3, **characterized in that** said method further comprises the step of:

determining (M7/1) an average signal-to-interference ratio information or an average signal-to-noise-plus-interference ratio information according to said downlink beam with the largest received carrier power and said second downlink beams,

and said first feedback information and said second feedback information further comprises said average signal-to-interference ratio information or said average signal-to-noise-plus-interference ratio information as a fourth component.

8. The method according to claim 1, **characterized in that** said method being used in a multi-sector environment with at least two sectors (SEC1, SEC2, SEC3) of a radio cell (C1), a first sector (SEC1) being controlled by a first baseband board (BB1) and at least a second sector (SEC2, SEC3) being controlled by at least a second baseband board (BB2, BB3), and said method further comprises:

transmitting (M8/1) at least second reference signals for said at least second sector (SEC2, SEC3) by said base station (BS1);
receiving (M8/2) said at least second reference signals by at least one of said mobile,stations (MS1, MS2, MS3);
transmitting (M8/3) sector feedback information of said at least second sector (SEC2, SEC3) from said at least second baseband board (BB2, BB3) to said first baseband board (BB1); and receiving (M8/4) said sector feedback information by said first baseband board (BB1); and
said building (M1/9) of said mobile station set takes into account said sector feedback information.

9. The method according to claim 1, **characterized in that** said method being used in a multi-cell environment with at least two radio cells (C1, C2, C3) of a radio access network (RAN1), a first radio cell (C1) being controlled by said base station (BS1) and at least a second radio cell (C2, C3) being controlled by at least a further base station (BS2, BS3), and said method further comprises the steps of:

transmitting (M9/1) at least second reference signals for said at least second radio cell (C2, C3) by said at least further base station (BS2, BS3);
receiving (M9/2) said at least second reference signals by at least one of said mobile stations (MS1, MS2, MS3);
transmitting (M9/3) cell feedback information of said at least second cell (C2, C3) from said at least further base station (BS2, BS3) to said base station (BS1); and
receiving (M9/4) said cell feedback information by said base station (BS1); and
said building (M1/9) of said mobile station set takes into account said cell feedback information.

10. The method according to claim 4, **characterized in that** an operation and maintenance centre (OMC1) configures at least one of the following at said base station (BS1, BS2, BS3): said first threshold, said first range, said second threshold, said second range, or said third threshold.

11. A radio communication system (RCS1), said radio communication system (RCS1) comprising a radio access network (RAN1) with a base station (BS1, BS2, BS3) and at least two mobile stations (MS1, MS2, MS3), said at least two mobile stations (MS1, MS2, MS3) being served by said base station (BS1, BS2, BS3), said radio communication system (RCS1) further comprises:

means (M1/1) for transmitting from said base station (BS1, BS2, BS3) first reference signals for being able to determine properties of a first downlink channel (DL1) between said base station (BS1, BS2, BS3) and said at least two mobile stations (MS1, MS2, MS3);
means (M1/2) for receiving said first reference signals at said at least two mobile stations (MS1, MS2, MS3);
means (M1/3, M1/4, M1/5, M1/6) for determining a first feedback information at a first one of said at least two mobile stations (MS1, MS2, MS3) and a second feedback information at a second one of said at least two mobile stations (MS1, MS2, MS3) comprising each a first component indicating a downlink beam with a largest received carrier power of at least two downlink beams (DB1, DB2, DB3, DB4) of a first downlink channel (DL1);
means (M1/7) for transmitting said first feedback information and said second feedback information from said at least two mobile stations (MS1, MS2, MS3) to said base station (BS1, BS2, BS3);
means (M1/8) for receiving said first feedback information and said second feedback information at said base station (BS1, BS2, BS3); and means (M1/9) for building a mobile station set of at least two of said at least two mobile stations (MS1, MS2, MS3) at said base station (BS1, BS2, BS3) according to said first feedback information and said second feedback information, if at least two mobile stations (MS1, MS2, MS3) have reported feedback information,

**characterized by** said means (M1/3, M1/4, M1/5, M1/6, M1/7, M1/8, M1/9) of said radio communication system (RCS1) for building said mobile station set are adapted to handle said first feedback information and said second feedback information further comprising a second component indicating a further downlink beam with a fewest received carrier power of said at least two downlink beams (DB1, DB2, DB3, DB4).

12. A base station (BS1, BS2, BS3) for use in a radio communication system (RCS1), said base station (BS1, BS2, BS3) comprising a first antenna system (AS1) with at least two antenna elements (AE1, AE2), said base station (BS1, BS2, BS3) being a serving base station of at least two mobile stations (MS1, MS2, MS3), said base station (BS1, BS2, BS3) further comprises:

means (M1/1) for transmitting first reference signals for being able to determine properties of a first downlink channel (DL1);
means (M1/8) for receiving a first feedback information and a second feedback information from said at least two mobile stations (MS1, MS2, MS3); and
means (M1/9) for building a mobile station set of at least two of said at least two mobile stations (MS1, MS2, MS3) according to said first feedback information and said second feedback information, if at least two mobile stations (MS1, MS2, MS3) have reported feedback information,
and said first feedback information and said second feedback information comprise each a first component indicating a downlink beam with a largest received carrier power of at least two downlink beams (DB1, DB2, DB3, DB4),

**characterized by** said means (M1/8, M1/9) of said base station (BS1, BS2, BS3) for building said mobile station set are adapted to handle a second component of said first feedback information and said second feedback information indicating a further downlink beam with a fewest received carrier power of said at least two downlink beams (DB1, DB2, DB3, DB4).

13. The base station (BS1, BS2, BS3) according to claim 12,
**characterized in that** said base station (BS1, BS2, BS3) further comprises:

means (M9/4) for receiving cell feedback information from neighbouring base stations (BS1, BS2, BS3), and said means (1/9) for building said mobile station set taking into account said cell feedback information for reducing inter-cell spatial interference.

14. A mobile station (MS1, MS2, MS3) for use in a radio communication system (RCS1), said mobile station (MS1, MS2, MS3) being served by a base station (BS1, BS2, BS3), said mobile station (MS1, MS2, MS3) comprising:

means (M1/2) for receiving first reference signals from said base station (BS1, BS2, BS3);
means (M1/3, M1/4, M1/5, M1/6) for determining a feedback information comprising a first component indicating a downlink beam with a largest received carrier power of at least two downlink beams (DB1, DB2, DB3, DB4) of a first downlink channel (DL1) transmitted from said base station (BS1, BS2, BS3);
means (M1/7) for transmitting said feedback information to said base station (BS1, BS2, BS3);

**characterized by** said means (M1/3, M1/4, M1/5, M1/6) of said mobile station (MS1, MS2, MS3) providing information for building mobile station sets at said base station (BS1, BS2, BS3) are adapted to handle a second component of said feedback information indicating a further downlink beam with a fewest received carrier power of said at least two downlink beams (DB1, DB2, DB3, DB4).

**Patentansprüche**

1. Ein Verfahren zum Einrichten von Sätzen von Mobilstationen in einem Funkkommunikationssystem (RCS1), wobei das besagte Verfahren die folgenden Schritte umfasst:

Übertragen (M1/1) von ersten Referenzsignalen von einer Basisstation (BS1, BS2, BS3) zu mindestens zwei Mobilstationen (MS1, MS2, MS3), um das Bestimmen von Eigenschaften eines ersten Downlink-Kanals (DL1) zwischen der besagten Basisstation (BS1, BS2, BS3) und den besagten zwei Mobilstationen (MS1, MS2, MS3) zu ermöglichen;
Empfangen (M1/2) des besagten ersten Referenzsignals an den besagten mindestens zwei Mobilstationen (MS1, MS2, MS3);

Bestimmen (M1/3, M1/4, M1/5, M1/6) einer ersten Feedback-Information an einer ersten der besagten mindestens zwei Mobilstationen (MS1, MS2, MS3) und einer zweiten Feedback-Information an einer zweiten der besagten mindestens zwei Mobilstationen (MS1, MS2, MS3), welche jeweils eine erste Komponente umfassen, die einen Downlink-Strahl mit einer höchsten empfangenen Trägerleistung von mindesten zwei Downlink-Strahlen (DB1, DB2, DB3, DB4) des besagten ersten Downlink-Kanals (DL1) angibt;

Übertragen (M1/7) der besagten ersten Feedback-Information und der besagten zweiten Feedback-Information von der besagten ersten und der besagten zweiten der besagten mindestens zwei Mobilstationen (MS1, MS2, MS3) an die besagte Basisstation (BS1, BS2, BS3);

Empfangen (M1/8) der besagten ersten Feedback-Information und der besagten zweiten Feedback-Information an der besagten Basisstation (BS1, BS2, BS3); und

Einrichten (M1/9) eines Satzes von Mobilstationen mit mindestens zwei der besagten mindestens zwei Mobilstationen (MS1, MS2, MS3) an der besagten Basisstation (BS1, BS2, BS3) gemäß der besagten ersten Feedback-Information und der besagten zweiten Feedback-Information, wenn mindestens zwei Mobilstationen (MS1, MS2, MS3) Feedback-Informationen gemeldet haben,

**dadurch gekennzeichnet, dass** die besagte erste Feedback-Information und die besagte zweite Feedback-Information weiterhin eine zweite Komponente umfassen, welche einen weiteren Downlink-Strahl mit einer niedrigsten Trägerleistung der besagten mindestens zwei Downlink-Strahlen (DB1, DB2, DB3, DB4) angibt.

2. Das Verfahren nach Anspruch 1, **dadurch gekennzeichnet, dass** das Verfahren weiterhin den folgenden Schritt umfasst:

Überprüfen (M2/1) durch mindestens eine der besagten mindestens zwei Mobilstationen (MS1, MS2, MS3), ob mindestens zwei erste Downlink-Strahlen der besagten mindestens zwei Downlink-Strahlen (DB1, DB2, DB3, D4) eine empfangene Trägerleistung aufweisen, welche einen ersten Grenzwert überschreitet oder sich innerhalb eines ersten Bereichs befindet, und wobei mindestens die besagte erste Feedback-Information oder die besagte zweite Feedback-Information weiterhin mindestens eine weitere erste Komponente umfasst, welche einen zweiten der besagten mindestens zwei ersten Downlink-Strahlen angibt.

3. Das Verfahren nach Anspruch 1, **dadurch gekennzeichnet, dass** das besagte Verfahren weiterhin die folgenden Schritte umfasst:

Überprüfen (M3/1) durch mindestens eine der besagten mindestens zwei Mobilstationen (MS1, MS2, MS3), ob mindestens zwei zweite Downlink-Strahlen der besagten mindestens zwei Downlink-Strahlen (DB1, DB2, DB3, DB4) eine empfangene Trägerleistung aufweisen, welche unter einem zweiten Grenzwert liegt oder sich innerhalb eines zweiten Bereichs befindet, und wobei mindestens die besagte erste Feedback-Information oder die besagte zweite Feedback-Information weiterhin mindestens eine weitere zweite Komponente umfasst, welche einen zweiten der besagten mindestens zwei zweiten Downlink-Strahlen angibt.

4. Das Verfahren nach Anspruch 2 und Anspruch 3, **dadurch gekennzeichnet, dass** der besagte erste Downlink-Kanal (DL1) mindestens zwei weitere Downlink-Strahlen umfasst, und dass das besagte Verfahren weiterhin die folgenden Schritte umfasst:

Überprüfen (M4/1), ob ein dritter Grenzwert für eine Anzahl der besagten mindestens zwei an die besagte Basisstation (BSI, BS2, BS3) angeschlossenen Mobilstationen hinterschnitten ist; und

Übertragen (M4/2) eines Befehls von der besagten Basisstation (BS1, BS2, BS3) an die besagten mindestens zwei Mobilstationen (MS1, MS2, MS3) zum Melden der besagten mindestens zwei ersten Downlink-Strahlen und der besagten mindestens zwei zweiten Downlink-Strahlen (DB1, DB2, DB3, DB4) und der besagten mindestens zwei weiteren Downlink-Strahlen.

5. Das Verfahren nach Anspruch 1, **dadurch gekennzeichnet, dass** das besagte Verfahren weiterhin die folgenden Schritte umfasst:

Bestimmen (M5/1) einer Kanalqualitätsangabe für den besagten Downlink-Strahl mit der höchsten empfangenen Trägerleistung durch die besagten mindesten zwei Mobilstationen (MS1, MS2, MS3); und

Auswählen (M5/2) eines Transportformats für die besagten mindestens zwei Mobilstationen (MS1, MS2, MS3) an der besagten Basisstation (BSI, BS2, BS3) gemäß der besagten Kanalqualitätsangabe, und

wobei die besagte erste Feedback-Information und die besagte zweite Feedback-Information weiterhin eine dritte Komponente mit der besagten Kanalqualitätsangabe umfassen.

6. Das Verfahren nach Anspruch 1, **dadurch gekennzeichnet, dass** das besagte Verfahren weiterhin den folgenden Schritt umfasst:

Bestimmen (M6/1) einer Signal-Störabstand-Information oder einer Signal-Rausch-plus-Störabstand-Information gemäß dem besagten Downlink-Strahl mit der höchsten empfangenen Trägerleistung und dem besagten weiteren Downlink-Strahl mit der niedrigsten empfangenen Trägerleistung,
und wobei die besagte erste Feedback-Information und die besagte zweite Feedback-Information weiterhin eine vierte Komponente mit der besagten Signal-Störabstand-Information oder der besagten Signal-Rausch-plus-Störabstand-Information umfassen.

7. Das Verfahren nach Anspruch 3, **dadurch gekennzeichnet, dass** das besagte Verfahren weiterhin den folgenden Schritt umfasst:

Bestimmen (M7/1) einer Durchschnitts-Signal-Störabstand-Information oder einer Durchschnitts-Signal-Rausch-plus-Störabstand-Information gemäß dem besagten Downlink-Strahl mit der höchsten empfangenen Trägerleistung und den besagten zweiten Downlink-Strahlen,
und wobei die besagte erste Feedback-Information und die besagte zweite Feedback-Information weiterhin die besagte Durchschnifts-Signal-Störabstand-Information oder die besagte Durchschnitts-Signal-Rausch-plus-Störabstand-Information als eine vierte Komponente umfassen.

8. Das Verfahren nach Anspruch 1, **dadurch gekennzeichnet, dass** das besagte Verfahren in einer Mehrfachsektor-Umgebung mit mindestens zwei Sektoren (SEC1, SEC2, SEC3) einer Funkzelle (C1) angewendet wird, wobei ein erster Sektor (SEC1) von einem ersten Basisbandboard (BB1) gesteuert wird und mindestens ein zweiter Sektor (SEC2, SEC3) von mindestens einem zweiten Basisbandboard (BB2, BB3) gesteuert wird, und wobei das besagte Verfahren weiterhin umfasst:

Übertragen (M8/1) von mindestens zweiten Referenzsignalen für den besagten mindestens zweiten Sektor (SEC2, SEC3) durch die besagte Basisstation (BS1);
Empfangen (M8/2) der besagten mindestens zweiten Referenzsignale an mindestens einer der besagten Mobilstationen (MS1, MS2, MS3);
Übertragen (M8/3) der Sektor-Feedback-Information des besagten mindestens zweiten Sektors (SEC2, SEC3) von dem besagten mindestens zweiten Basisbandboard (BB2, BB3) an das besagte erste Basisbandboard (BB1); und
Empfangen (M8/4) der besagten Sektor-Feedback-Information an dem besagten ersten Basisbandboard (BB1); und
wobei das besagte Einrichten (M1/9) des besagten Satzes von Mobilstationen die besagte Sektor-Feedback-Information berücksichtigt.

9. Das Verfahren nach Anspruch 1, **dadurch gekennzeichnet, dass** das Verfahren in einer Mehrfachzellen-Umgebung mit mindestens zwei Funkzellen (C1, C2, C3) eines Funkzugangsnetzwerks (RAN1) angewendet wird, wobei eine erste Funkzelle (C1) von der besagten Basisstation (BS1) gesteuert wird, und mindestens eine zweite Funkzelle (C2, C3) von mindestens einer weiteren Basisstation (BS2, BS3) gesteuert wird, und wobei das besagte Verfahren weiterhin die folgenden Schritte umfasst:

Übertragen (M9/1) von mindestens zweiten Referenzsignalen für die besagte mindestens zweite Funkzelle (C2, C3) durch die besagte mindestens weitere Basisstation (BS2, BS3);
Empfangen (M9/2) der besagten mindestens zweiten Referenzsignale an mindestens einer der besagten Mobilstationen (MS1, MS2, MS3);
Übertragen (M9/3) der Zellen-Feedback-Information der besagten mindestens zweiten Zelle (C2, C3) von der besagten mindestens weiteren Basisstation (BS2, BS3) an die besagte Basisstation (BS1); und Empfangen (M9/4) der besagten Zellen-Feedback-Information an der besagten Basisstation (BS1); und wobei das besagte Einrichten (M1/9) des besagten Satzes von Mobilstationen die besagte Zellen-Feedback-Information berücksichtigt.

10. Das Verfahren nach Anspruch 4, **dadurch gekennzeichnet, dass** eine Betriebs- und Wartungszentrale (OMC1) mindestens einen der folgenden Parameter an der besagten Basisstation (BS1, BS2, BS3) konfiguriert: Den besagten ersten Grenzwert, den besagten ersten Bereich, den besagten zweiten Grenzwert, den besagten zweiten Bereich, oder den besagten dritten Grenzwert.

**11.** Ein Funkkommunikationssystem (RCS1), wobei das besagte Funkkommunikationssystem (RCS1) ein Funkzugangsnetzwerk (RAN1) mit einer Basisstation (BS1, BS2, BS3) und mindestens zwei Mobilstationen (MS1, MS2, MS3) umfasst, wobei die besagten mindestens zwei Mobilstationen (MS1, MS2, MS3) von der besagten Basisstation (BS1, BS2, BS3) bedient werden, wobei das besagte Funkkommunikationssystem (RCS1) weiterhin umfasst:

Mittel (M1/1) zum Übertragen von ersten Referenzsignalen von der besagten Basisstation (BS1, BS2, BS3), um das Bestimmen von Eigenschaften eines ersten Downlink-Kanals (DL1) zwischen der besagten Basisstation (BS1, BS2, BS3) und den besagten mindestens zwei Mobilstationen (MS1, MS2, MS3) zu ermöglichen;
Mittel (M1/2) zum Empfangen des besagten ersten Referenzsignals an den besagten mindestens zwei Mobilstationen (MS1, MS2, MS3);
Mittel (M1/3, M1/4, M1/5, M1/6) zum Bestimmen einer ersten Feedback-Information an einer ersten der besagten mindestens zwei Mobilstationen (MS1, MS2, MS3) und einer zweiten Feedback-Information an einer zweiten der besagten mindestens zwei Mobilstationen (MS1, MS2, MS3), welche jeweils eine erste Komponente umfassen, die einen Downlink-Strahl mit einer höchsten empfangenen Trägerleistung von mindesten zwei Downlink-Strahlen (DB1, DB2, DB3, DB4) eines ersten Downlink-Kanals (DL1) angibt;
Mittel (M1/7) zum Übertragen der besagten ersten Feedback-Information und der besagten zweiten Feedback-Information von den besagten mindestens zwei Mobilstationen (MS1, MS2, MS3) an die besagte Basisstation (BS1, BS2, BS3);
Mittel (M1/8) zum Empfangen der besagten ersten Feedback-Information und der besagten zweiten Feedback-Information an der besagten Basisstation (BS1, BS2, BS3); und Mittel (M1/9) zum Einrichten eines Satzes von Mobilstationen von mindestens zwei der besagten mindestens zwei Mobilstationen (MS1, MS2, MS3) an der besagten Basisstation (BS1, BS2, BS3) gemäß der besagten ersten Feedback-Information und der besagten zweiten Feedback-Information, wenn mindestens zwei Mobilstationen (MS1, MS2, MS3) Feedback-Informationen gemeldet haben,

**dadurch gekennzeichnet, dass** die besagten Mittel (M1/3, M1/4, M1/5, M1/6, M1/7, M1/8, M1/9) des besagten Funkkommunikationssystems (RCS1) zum Einrichten des besagten Satzes von Mobilstationen dazu ausgelegt sind, die besagte erste Feedback-Information und die besagte zweite Feedback-Information, welche weiterhin eine zweite Komponente umfasst, die einen weiteren Downlink-Strahl mit einer niedrigsten empfangenen Trägerleistung der besagten mindestens zwei Downlink-Strahlen (DB1, DB2, DB3, DB4) angibt, zu verarbeiten.

**12.** Eine Basisstation (BS1, BS2, BS3) zur Verwendung in einem Funkkommunikationssystem (RCS1), wobei die besagte Basisstation (BS1, BS2, BS3) ein erstes Antennensystem (AS1) mit mindestens zwei Antennenelementen (AE1, AE2) umfasst, wobei die besagte Basisstation (BS1, BS2, BS3) eine mindestens zwei Mobilstationen (MS1, MS2, MS3) bedienende Basisstation ist, wobei die besagte Basisstation (BS1, BS2, BS3) weiterhin umfasst:

Mittel (M1/1) zum Übertragen von ersten Referenzsignalen, um das Bestimmen der Eigenschaften eines ersten Downlink-Kanals (DL1) zu ermöglichen;
Mittel (M1/8) zum Empfangen einer ersten Feedback-Information und einer zweiten Feedback-Information von den besagten mindestens zwei Mobilstationen (MS1, MS2, MS3); und
Mittel (M1/9) zum Einrichten eines Satzes von Mobilstationen von mindestens zwei der besagten mindestens zwei Mobilstationen (MS1, MS2, MS3) gemäß der besagten ersten Feedback-Information und der besagten zweiten Feedback-Information, wenn mindestens zwei Mobilstationen (MS1, MS2, MS3) eine Feedback-Information gemeldet haben,
und wobei die besagte erste Feedback-Information und die besagte zweite Feedback-Information jeweils eine erste Komponente enthalten, welche einen Downlink-Strahl mit einer höchsten empfangenen Trägerleistung von mindestens zwei Downlink-Strahlen (DB1, DB2, DB3, DB4) angibt,

**dadurch gekennzeichnet, dass** die besagten Mittel (M1/8, M1/9) der besagten Basisstation (BS1, BS2, BS3) zum Einrichten des besagten Satzes von Mobilstationen dazu ausgelegt sind, eine zweite Komponente der besagten ersten Feedback-Information und die besagte zweite Feedback-Information, welche einen weiteren Downlink-Strahl mit einer niedrigsten empfangen Trägerleistung der besagten mindestens zwei Downlink-Strahlen (DB1, DB2, DB3, DB4) angibt, zu verarbeiten.

13. Die Basisstation (BS1, BS2, BS3) nach Anspruch 12,
**dadurch gekennzeichnet, dass** die besagte Basisstation (BS1, BS2, BS3) weiterhin umfasst:

Mittel (M9/4) zum Empfangen einer Zellen-Feedback-Information von benachbarten Basisstationen (BS1, BS2, BS3), und
wobei die besagten Mittel (1/9) zum Einrichten des besagten Satzes von Mobilstationen die besagte Zellen-Feedback-Information berücksichtigt, um die räumlichen Störungen zwischen den Zellen zu reduzieren.

14. Eine Mobilstation (MS1, MS2, MS3) zur Verwendung in einem Funkkommunikationssystem (RCS1), wobei die besagte Mobilstation (MS1, MS2, MS3) von einer Basisstation (BS1, BS2, BS3) bedient wird, wobei die besagte Mobilstation (MS1, MS2, MS3) umfasst:

Mittel (M1/2) zum Empfangen von ersten Referenzsignalen von der besagten Basisstation (BS1, BS2, B53);
Mittel (M1/3, M1/4, M1/5, M1/6) zum Bestimmen einer Feedback-Information mit einer ersten Komponente, welche einen Downlink-Strahl mit einer höchsten empfangenen Trägerleistung von mindestens zwei Downlink-Strahlen (DB1, DB2, DB3, DB4) eines von der besagten Basisstation (BS1, BS2, BS3) übertragenen ersten Downlink-Kanals (DL) angibt;
Mittel (M1/7) zum Übertragen der besagten Feedback-Information an die besagte Basisstation (BS1, BS2, BS3);

**dadurch gekennzeichnet, dass** die besagten Mittel (M1/3, M1/4, M1/5, M1/6) der besagten Mobilstation (MS1, MS2, MS3), welche Informationen für das Einrichten eines Satzes von Mobilstationen an der besagten Basisstation (BS1, BS2, BS3) bereitstellen, dazu ausgelegt sind, eine zweite Komponente der besagten Feedback-Information, welche einen weiteren Downlink-Strahl mit einer niedrigsten empfangenen Trägerleistung der besagten mindestens zwei Downlink-Strahlen (DB1, DB2, DB3, DB4) angibt, zu verarbeiten.

## Revendications

1. Procédé de construction d'ensembles de stations mobiles dans un système de communication radio (RCS1), ledit procédé comprenant les étapes suivantes :

transmettre (M1/1) les premiers signaux de référence provenant d'une station de base (BS1, BS2, BS3) vers au moins deux stations mobiles (MS1, MS2, MS3) afin de pouvoir déterminer des propriétés d'un premier canal de liaison descendante (DL1) entre ladite station de base (BS1, BS2, BS3) et lesdites au moins deux stations mobiles (MS1, MS2, MS3) ;
recevoir (M1/2) lesdits premiers signaux de référence au moyen desdites au moins deux stations mobiles (MS1, MS2, MS3) ;
déterminer (M1/3, M1/4, M1/5, M1/6) une première information de rétroaction dans une première parmi lesdites au moins deux stations mobiles (MS1, MS2, MS3) et une deuxième information de rétroaction dans une deuxième parmi lesdites au moins deux stations mobiles (MS1, MS2, MS3) comprenant chacune une première composante indiquant un faisceau de liaison descendante ayant la plus grande puissance de porteuse reçue parmi au moins deux faisceaux de liaison descendante (DB1, DB2, DB3, DB4) dudit premier canal de liaison descendante (DL1) ;
transmettre (M1/7) ladite première information de rétroaction et ladite deuxième information de rétroaction provenant de ladite première et de ladite deuxième parmi lesdites au moins deux stations mobiles (MS1, MS2, MS3) vers ladite station de base (BS1, BS2, BS3) ;
recevoir (M1/8) ladite première information de rétroaction et ladite deuxième information de rétroaction dans ladite station de base (BS1, BS2, BS3) ; et
construire (M1/9) un ensemble de stations mobiles d'au moins deux parmi lesdites au moins deux stations mobiles (MS1, MS2, MS3) dans ladite station de base (BS1, BS2, BS3) conformément à ladite première information de rétroaction et à ladite deuxième information de rétroaction, si au moins deux stations mobiles (MS1, MS2, MS3) ont signalé des informations de rétroaction,

**caractérisé en ce que** ladite première information de rétroaction et ladite deuxième information de rétroaction comprennent en outre une deuxième composante indiquant un autre faisceau de liaison descendante ayant la plus faible puissance de porteuse reçue parmi lesdits au moins deux faisceaux de liaison descendante (DB1, DB2, DB3, DB4).

2. Procédé selon la revendication 1, **caractérisé en ce que** ledit procédé comprend en outre l'étape suivante :

vérifier (M2/1) au moyen d'au moins une parmi lesdites au moins deux stations mobiles (MS1, MS2, MS3), si au moins deux premiers faisceaux de liaison descendante parmi lesdits au moins deux faisceaux de liaison descendante (DB1, DB2, DB3, DB4) présentent une puissance de porteuse reçue supérieure à un premier seuil ou comprise dans une plage, et au moins ladite première information de rétroaction ou ladite deuxième information de rétroaction comprend en outre au moins une autre première composante indiquant un deuxième parmi lesdits au moins deux premiers faisceaux de liaison descendante.

3. Procédé selon la revendication 1, **caractérisé en ce que** ledit procédé comprend en outre l'étape suivante :

vérifier (M3/1) au moyen d'au moins une parmi lesdites au moins deux stations mobiles (MS1, MS2, MS3), si au moins deux deuxièmes faisceaux de liaison descendante parmi lesdits au moins deux faisceaux de liaison descendante (DB1, DB2, DB3, DB4) présentent une puissance de porteuse reçue inférieure à un deuxième seuil ou comprise dans une deuxième plage, et au moins ladite première information de rétroaction ou ladite deuxième information de rétroaction comprend en outre au moins une autre deuxième composante indiquant un deuxième parmi lesdits au moins deux deuxièmes faisceaux de liaison descendante.

4. Procédé selon la revendication 2 et la revendication 3, **caractérisé en ce que** ledit premier canal de liaison descendante (DL1) comprend au moins deux autres faisceaux de liaison descendante, ledit procédé comprenant en outre les étapes suivantes :

vérifier (M4/1) si un troisième seuil pour plusieurs parmi lesdites au moins deux stations mobiles (MS1, MS2, MS3) connectées à ladite station de base (BS1, BS2, BS3) est réduit ; et
transmettre (M4/2) une instruction provenant de ladite station de base (BS1, BS2, BS3) vers lesdites au moins deux stations mobiles (MS1, MS2, MS3) pour signaler lesdits au moins deux premiers faisceaux de liaison descendante et lesdits au moins deux deuxièmes faisceaux de liaison descendante parmi lesdits au moins deux faisceaux de liaison descendante (DB1, DB2, DB3, DB4) et parmi lesdits au moins deux autres faisceaux de liaison descendante.

5. Procédé selon la revendication 1, **caractérisé en ce que** ledit procédé comprend en outre les étapes suivantes ;

déterminer (M5/1) une indication de qualité de canal pour ledit faisceau de liaison descendante ayant la plus grande puissance de porteuse reçue au moyen desdites au moins deux stations mobiles (MS1, MS2, MS3) ; et
sélectionner (M5/2) un format de transport pour lesdites au moins deux stations mobiles (MS1, MS2, MS3) dans ladite station de base (BS1, BS2, BS3) conformément à ladite indication de qualité de canal, et
ladite première information de rétroaction et ladite deuxième information de rétroaction comprennent en outre une troisième composante avec ladite indication de qualité de canal.

6. Procédé selon la revendication 1, **caractérisé en ce que** ledit procédé comprend en outre l'étape suivante :

déterminer (M6/1) une information de rapport signal / interférence ou une information de rapport signal sur bruit plus interférence conformément audit faisceau de liaison descendante ayant la plus grande puissance de porteuse reçue et audit autre faisceau de liaison descendante ayant la plus faible puissance de porteuse reçue, et ladite première information de rétroaction et ladite deuxième information de rétroaction comprennent en outre une quatrième composante avec ladite information de rapport signal / interférence ou ladite information de rapport signal sur bruit plus interférence.

7. Procédé selon la revendication 3, **caractérisé en ce que** ledit procédé comprend en outre l'étape suivante :

déterminer (M7/1) une information de rapport signal / interférence moyen ou une information de rapport signal sur bruit plus interférence moyen conformément audit faisceau de liaison descendante ayant la plus grande puissance de porteuse reçue et auxdits deuxièmes faisceaux de liaison descendante,
et ladite première information de rétroaction et ladite deuxième information de rétroaction comprennent en outre ladite information de rapport signal / interférence moyen ou ladite information de rapport signal sur bruit plus interférence moyen en tant que quatrième composante.

8. Procédé selon la revendication 1, **caractérisé en ce que** ledit procédé est utilisé dans un environnement à plusieurs secteurs avec au moins deux secteurs (SEC1, SEC2, SEC3) d'une cellule radio (C1), un premier secteur (SEC1) étant commandé par une première carte de bande de base (BB1) et au moins un deuxième secteur (SEC2, SEC3) étant commandé par au moins une deuxième carte de bande de base (BB2, BB3), ledit procédé comprenant en outre les étapes suivantes :

> transmettre (M8/1) au moins les deuxièmes signaux de référence pour ledit au moins deuxième secteur (SEC2, SEC3) au moyen de ladite station de base (BS1) ;
> recevoir (M8/2) lesdits au moins deuxièmes signaux de référence au moyen d'au moins une parmi lesdites stations mobiles (MS1, MS2, MS3) ;
> transmettre (M8/3) des informations de rétroaction de secteur dudit au moins deuxième secteur (SEC2, SEC3) provenant de ladite au moins deuxième carte de bande de base (BB2, BB3) vers ladite première carte de bande de base (BB1) ; et
> recevoir (M8/4) lesdites informations de rétroaction de secteur au moyen de ladite première carte de bande de base (BB1); et ladite construction (M1/9) dudit ensemble de stations mobiles prend en compte lesdites informations de rétroaction de secteur.

9. Procédé selon la revendication 1, **caractérisé en ce que** ledit procédé est utilisé dans un environnement à plusieurs cellules avec au moins deux cellules radio (C1, C2, C3) d'un réseau d'accès radio (RAN1), une première cellule radio (C1) étant commandée par ladite station de base (BS1) et au moins une deuxième cellule radio (C2, C3) étant commandée par au moins une autre station de base (BS2, BS3), ledit procédé comprenant en outre les étapes suivantes :

> transmettre (M9/1) au moins les deuxièmes signaux de référence pour ladite au moins deuxième cellule radio (C2, C3) au moyen de ladite au moins autre station de base (BS2, BS3) ;
> recevoir (M9/2) lesdits au moins deuxièmes signaux de référence au moyen d'au moins une parmi lesdites stations mobiles (MS1, MS2, MS3) ;
> transmettre (M9/3) des informations de rétroaction de cellule de ladite au moins deuxième cellule (C2, C3) provenant de ladite au moins autre station de base (BS2, BS3) vers ladite station de base (BS1) ; et
> recevoir (M9/4) lesdites informations de rétroaction de cellule au moyen de ladite station de base (BS1) ; et ladite construction (M1/9) dudit ensemble de stations mobiles prend en compte lesdites informations de rétroaction de cellule.

10. Procédé selon la revendication 4, **caractérisé en ce qu'**un centre d'exploitation et de maintenance (OMC1) configure au moins un des éléments suivants dans ladite station de base (BS1, BS2, BS3) : ledit premier seuil, ladite première plage, ledit deuxième seuil, ladite deuxième plage ou ledit troisième seuil.

11. Système de communication radio (RCS1), ledit système de communication radio (RCS1) comprenant un réseau d'accès radio (RAN1) avec une station de base (BS1, BS2, BS3) et au moins deux stations mobiles (MS1, MS2, MS3), lesdites au moins deux stations mobiles (MS1, MS2, MS3) étant desservies par ladite station de base (BS1, BS2, BS3), ledit système de communication radio (RCS1) comprend en outre :

> des moyens (M1/1) pour transmettre depuis ladite station de base (BS1, BS2, BS3) les premiers signaux de référence afin de pouvoir déterminer des propriétés d'un premier canal de liaison descendante (DL1) entre ladite station de base (BS1, BS2, BS3) et lesdites au moins deux stations mobiles (MS1, MS2, MS3) ;
> des moyens (M1/2) pour recevoir lesdits premiers signaux de référence dans lesdites au moins deux stations mobiles (MS1, MS2, MS3) ;
> des moyens (M1/3, M1/4, M1/5, M1/6) pour déterminer une première information de rétroaction dans une première parmi lesdites au moins deux stations mobiles (MS1, MS2, MS3) et une deuxième information de rétroaction dans une deuxième parmi lesdites au moins deux stations mobiles (MS1, MS2, MS3) comprenant chacune une première composante indiquant un faisceau de liaison descendante ayant la plus grande puissance de porteuse reçue parmi au moins deux faisceaux de liaison descendante (DB1, DB2, DB3, DB4) d'un premier canal de liaison descendante (DL1) ;
> des moyens (M1/7) pour transmettre ladite première information de rétroaction et ladite deuxième information de rétroaction provenant desdites au moins deux stations mobiles (MS1, MS2, MS3) vers ladite station de base (BS1, BS2, BS3) ;
> des moyens (M1/8) pour recevoir ladite première information de rétroaction et ladite deuxième information de rétroaction dans ladite station de base (BS1, BS2, BS3) ; et des moyens (M1/9) pour construire un ensemble de stations mobiles d'au moins deux parmi lesdites au moins deux stations mobiles (MS1, MS2, MS3) dans ladite station de base (BS1, BS2, BS3) conformément à ladite première information de rétroaction et à ladite deuxième information de rétroaction, si au moins deux stations mobiles (MS1, MS2, MS3) ont signalé des informations de rétroaction,

**caractérisé en ce que** lesdits moyens (M1/3, M1/4, M1/5, M1/6, M1/7, M1/8, M1/9) dudit système de communication radio (RCS1) pour construire ledit ensemble de stations mobiles sont adaptés pour gérer ladite première information de rétroaction et ladite deuxième information de rétroaction comprenant en outre une deuxième composante indiquant un autre faisceau de liaison descendante ayant la plus faible puissance de porteuse reçue parmi lesdits au moins deux faisceaux de liaison descendante (DB1, DB2, DB3, DB4).

12. Station de base (BS1, BS2, BS3) à utiliser dans un système de communication radio (RCS1), ladite station de base (BS1, BS2, BS3) comprenant un premier système d'antenne (AS1) avec au moins deux éléments d'antenne (AE1, AE2), ladite station de base (BS1, BS2, BS3) étant une station de base de desserte d'au moins deux stations mobiles (MS1, MS2, MS3), ladite station de base (BS1, BS2, BS3) comprend en outre :

des moyens (M1/1) pour transmettre les premiers signaux de référence afin de pouvoir déterminer des propriétés d'un premier canal de liaison descendante (DL1) ;
des moyens (M1/8) pour recevoir une première information de rétroaction et une deuxième information de rétroaction provenant desdites au moins deux stations mobiles (MS1, MS2, MS3) ; et
des moyens (M1/9) pour construire un ensemble de stations mobiles d'au moins deux desdites au moins deux stations mobiles (MS1, MS2, MS3) conformément à ladite première information de rétroaction et à ladite deuxième information de rétroaction, si au moins deux stations mobiles (MS1, MS2, MS3) ont signalé des informations de rétroaction,
et ladite première information de rétroaction et ladite deuxième information de rétroaction comprennent chacune une première composante indiquant un faisceau de liaison descendante ayant la plus grande puissance de porteuse reçue parmi au moins deux faisceaux de liaison descendante (DB1, DB2, DB3, DB4),

**caractérisée en ce que** lesdits moyens (M1/8, M1/9) de ladite station de base (BS1, BS2, BS3) pour construire ledit ensemble de stations mobiles sont adaptés pour gérer une deuxième composante de ladite première information de rétroaction et de ladite deuxième information de rétroaction indiquant un autre faisceau de liaison descendante ayant la plus faible puissance de porteuse reçue parmi lesdits au moins deux faisceaux de liaison descendante (DB1, DB2, DB3, DB4).

13. Station de base (BS1, BS2, BS3) selon la revendication 12,
**caractérisée en ce que** ladite station de base (BS1, BS2, BS3) comprend en outre :

des moyens (M9/4) pour recevoir des informations de rétroaction de cellule provenant des stations de base (BS1, BS2, BS3) voisines, et
lesdits moyens (1/9) pour construire ledit ensemble de stations mobiles prenant en compte lesdites informations de rétroaction de cellule pour réduire l'interférence spatiale intercellulaire.

14. Station mobile (MS1, MS2, MS3) à utiliser dans un système de communication radio (RCS1), ladite station mobile (MS1, MS2, MS3) étant desservie par une station de base (BS1, BS2, BS3), ladite station mobile (MS1, MS2, MS3) comprenant :

des moyens (M1/2) pour recevoir les premiers signaux de référence provenant de ladite station de base (BS1, BS2, BS3) ;
des moyens (M1/3, M1/4, M1/5, M1/6) pour déterminer une information de rétroaction comprenant une première composante indiquant un faisceau de liaison descendante ayant la plus grande puissance de porteuse reçue parmi au moins deux faisceaux de liaison descendante (DB1, DB2, DB3, DB4) d'un premier canal de liaison descendante (DL1) transmis depuis ladite station de base (BS1, BS2, BS3) ;
des moyens (M1/7) pour transmettre ladite information de rétroaction vers ladite station de base (BS1, BS2, BS3) ;

**caractérisée en ce que** lesdits moyens (M1/3, M1/4, M1/5, M1/6) de ladite station mobile (MS1, MS2, MS3) fournissant des informations pour construire des ensembles de stations mobiles dans ladite station de base (BS1, BS2, BS3) sont adaptés pour gérer une deuxième composante de ladite information de rétroaction indiquant un autre faisceau de liaison descendante ayant la plus faible puissance de porteuse reçue parmi lesdits au moins deux faisceaux de liaison descendante (DB1, DB2, DB3, DB4).

*FIG. 1*

EP 2 166 807 B1

*FIG. 2*

EP 2 166 807 B1

*FIG. 3*

FIG. 4

EP 2 166 807 B1

EP 2 166 807 B1

M1

| M1/1<br>Transmitting first reference signals |
| --- |

↓

| M1/2<br>Receiving first reference signals |
| --- |

↓

| M1/3<br>Calculating MISO or MIMO channel matrix |
| --- |

↓

| M1/4<br>Calculating received carrier powers |
| --- |

↓

| M1/5<br>Determining best downlink beam |
| --- |

↓

| M1/6<br>Determining<br>best companion downlink beam |
| --- |

| M1/7<br>Transmitting feedback information |
| --- |

↓

| M1/8<br>Receiving feedback information |
| --- |

↓

| M1/9<br>Building mobile station set |
| --- |

*FIG. 5*

EP 2 166 807 B1

M2

| M1/1 |

| M1/2 |

| M1/3 |

| M1/4 |

M2/1
At least two suitable best downlink
beams within same range?     Y

N

| M2/2
Determining at least two suitable
best downlink beams |

| M1/5 |

| M1/6 |

| M1/7 |

| M1/8 |

| M1/9 |

*FIG. 6*

M3

M3/2
Determining at least two
suitable best companion downlink beams

M1/6

M1/7

M1/8

M1/9

M1/1

M1/2

M1/3

M1/4

M1/5

M3/1
At least two suitable best
companion downlink beams
within same range?

Y

N

FIG. 7

FIG. 8

EP 2 166 807 B1

EP 2 166 807 B1

```
                                              M5
                                              ↓

┌─────────────────────────────┐          ┌─────────────────────────────────────────────┐
│            M1/1             │          │                    M5/1                      │
└─────────────────────────────┘          │  Determining CQI value of best downlink beam │
              ↓                           └─────────────────────────────────────────────┘
┌─────────────────────────────┐                              ↓
│            M1/2             │          ┌─────────────────────────────────────────────┐
└─────────────────────────────┘          │                    M1/7                      │
              ↓                           └─────────────────────────────────────────────┘
┌─────────────────────────────┐                              ↓
│            M1/3             │          ┌─────────────────────────────────────────────┐
└─────────────────────────────┘          │                    M1/8                      │
              ↓                           └─────────────────────────────────────────────┘
┌─────────────────────────────┐                              ↓
│            M1/4             │          ┌─────────────────────────────────────────────┐
└─────────────────────────────┘          │                    M1/9                      │
              ↓                           └─────────────────────────────────────────────┘
┌─────────────────────────────┐                              ↓
│            M1/5             │          ┌─────────────────────────────────────────────┐
└─────────────────────────────┘          │                    M5/2                      │
              ↓                           │           Selecting transport formats        │
┌─────────────────────────────┐          └─────────────────────────────────────────────┘
│            M1/6             │
└─────────────────────────────┘
```

*FIG. 9*

M6/1
Determining SIR or SINR distance

M1/7

M1/8

M1/9

M6

M1/1

M1/2

M1/3

M1/4

M1/5

M1/6

*FIG. 10*

FIG. 11

M7

M1/1

M1/2

M1/3

M1/4

M1/5

M3/1
At least two suitable companion downlink beams within same range?  Y  N

M3/2
Determining at least two suitable companion downlink beams

M1/6

M7/1
Determining average SIR or SINR distance

M1/7

M1/8

M1/9

EP 2 166 807 B1

FIG. 12

M8

| M1/1 |
|---|

| M8/1<br>Transmitting second and<br>third reference signals |
|---|

| M8/2<br>Receiving second and<br>third reference signals |
|---|

| M1/2 |
|---|

| M1/3 |
|---|

● 

● 

● 

| M8/3<br>Transmitting sector feedback information from<br>baseband boards of neighbouring sectors |
|---|

| M8/4<br>Receiving sector feedback information from<br>baseband boards of neighbouring sectors |
|---|

| M1/9 |
|---|

*FIG. 13*

FIG. 14

EP 2 166 807 B1

M9

```
┌─────────────┐        ┌──────────────────────────┐
│    M1/1     │        │          M9/1            │
└──────┬──────┘        │  Transmitting second and │
       │               │   third reference signals │
       │               └─────────────┬────────────┘
       │                             │
       │                             ▼
       ▼               ┌──────────────────────────┐
┌─────────────┐        │          M9/2            │
│    M1/2     │        │   Receiving second and   │
└──────┬──────┘        │  third reference signals │
       │               └─────────────┬────────────┘
       │                             │
       └──────────────┬──────────────┘
                      │
                      ▼
┌─────────────────────────────────────┐
│               M1/3                  │
└─────────────────────────────────────┘

                  ●
                  ●
                  ●

┌─────────────────────────────────────┐
│               M1/9                  │◄──────┐
└─────────────────────────────────────┘       │
```

```
┌──────────────────────────────────────────┐
│                  M9/3                      │
│   Transmitting cell feedback information   │
│     from neighbouring base stations        │
└─────────────────────┬──────────────────────┘
                      │
                      ▼
┌──────────────────────────────────────────┐
│                  M9/4                      │
│    Receiving cell feedback information     │
│     from neighbouring base stations        │
└──────────────────────────────────────────┘
```

*FIG. 15*

RCS1

OMC1

OMC1-BS1

RAN1

BS1

C1

UL1

DL1

MS1

MS2

MS3

*FIG. 16*

FIG. 17

**EP 2 166 807 B1**

**REFERENCES CITED IN THE DESCRIPTION**

**Patent documents cited in the description**

- EP 1784032 A1

- US 20070249402 A1